(19) Europäisches Patentamt

European Patent Office

Office européen des brevets

(11) EP 0 565 413 B1

## (12) FASCICULE DE BREVET EUROPEEN

(45) Date de publication et mention
de la délivrance du brevet:
**21.02.1996 Bulletin 1996/08**

(51) Int. Cl.⁶: **B64C 27/46**

(21) Numéro de dépôt: **93400855.8**

(22) Date de dépôt: **02.04.1993**

(54) **Pale pour voilure tournante d'aéronef, à extrémité en flèche**

Rotorblatt eines Drehflügelflugzeuges mit Pfeilblattspitze

Rotorcraft rotor blade with tip sweepback

(84) Etats contractants désignés:
**DE GB IT**

(30) Priorité: **09.04.1992 FR 9204353**

(43) Date de publication de la demande:
**13.10.1993 Bulletin 1993/41**

(73) Titulaire: **EUROCOPTER FRANCE, Société Anonyme dite:**
**F-13725 Marignane Cédex (FR)**

(72) Inventeurs:
• **Toulmay, François Valentin**
**F-13127 Vitrolles (FR)**
• **Falchero, Danièle Anne**
**F-13122 Ventabren (FR)**

(74) Mandataire: **Bonnetat, Christian**
**F-75008 Paris (FR)**

(56) Documents cités:
**EP-A- 0 298 826**     **EP-A- 0 351 104**
**EP-A- 0 360 661**     **US-A- 3 066 742**

## Description

La présente invention concerne une pale pour voilure tournante d'aéronef, à extrémité en flèche.

On sait que, aussi bien en vol stationnaire qu'en vol d'avancement, les performances d'un rotor d'aéronef à voilure tournante, notamment un hélicoptère, sont limitées par les phénomènes suivants :

- les ondes de choc qui se développent à l'extrados des pales en position avançante lors du vol à grande vitesse ;
- le décrochage résultant du décollement de la couche limite à l'extrados des pales en position reculante, lors d'une demande de portance en vol de translation ;
- l'interaction du tourbillon engendré par la pale précédente avec la pale suivante, ce qui entraîne une dissipation importante d'énergie en vol stationnaire sous deux formes : puissance induite et puissance de traînée des profils.

Outre les pertes de performances, les chocs et l'interaction pale-tourbillon sont également responsables de nuisances sonores sous forme de bruits impulsifs, respectivement par délocalisation des chocs (vol à grande vitesse) et par modulation impulsive de la portance lorsque le tourbillon marginal frappe directement la pale (descente).

On a trouvé que les performances d'une pale pour voilure tournante d'aéronef dépendaient, dans une large mesure, de paramètres liés à la construction de la pale, tels que :

a) la répartition radiale de la surface de la pale ;
b) la mise en flèche de la partie d'extrémité libre de la pale ;
c) la répartition du vrillage des profits ;
d) la mise en dièdre de la partie d'extrémité libre de la pale.

L'influence de ces paramètres sur les performances d'une pale de voiture tournante est étudiée en détail ci-après.

### a) Répartition radiale de la surface de la pale.

Pour un rotor d'aéronef à voilure tournante dont les profits ou sections élémentaires travaillent tous au même coefficient de portance Cz, la portance linéique varie comme le carré de la vitesse locale, laquelle est directement proportionnelle au rayon (position radiale) $\underline{r}$ de la section. Il en résulte que la portance totale de la pale varie proportionnellement à la corde moyenne $\overline{L}$, définie par une pondération en carré du rayon $\underline{r}$ :

$$\overline{L} = \frac{\int_{R0}^{R} L(r) \, r^2 \, dr}{\int_{R0}^{R} r^2 \, dr}$$

dans laquelle R0 représente le rayon $\underline{r}$ à l'origine de la partie empennée de la pale, et R le rayon total de la pale.

Il est d'usage courant de comparer les performances des pales de différentes formes en les rapportant à cette corde moyenne $\overline{L}$.

Par rapport à une pale classique de forme rectangulaire, les calculs montrent, et l'expérience le confirme, qu'une réduction de la corde à l'extrémité externe de la pale (forme effilée) améliore les performances, en particulier à grande vitesse. Cette amélioration des performances s'explique par la réduction de traînée des profils due à la réduction de la corde en extrémité. Les chocs situés dans cette zone s'exercent sur une surface plus faible, tandis que la partie centrale de la pale, non soumise aux chocs, assure alors l'essentiel de la portance avec une finesse maximale : le quotient portance/traînée y est maximal.

L'augmentation de la corde sur le reste de l'envergure de la pale, nécessaire pour maintenir la corde moyenne constante, est cependant importante du fait de la pondération en $r^2$. Il en résulte un alourdissement important du rotor. Néanmoins, l'effilement vers l'extérieur de la pale est un moyen couramment utilisé pour améliorer les performances de celle-ci, en général en combinaison avec une mise en flèche de l'extrémité de la pale, comme l'illustrent les brevets FR-2 617 118 et FR-2 473 983.

Par ailleurs, le brevet FR-2 311 713 propose une construction très différente, qui consiste, entre autres particularités, à élargir la corde, de façon brutale, au-delà d'une section située à environ 87% du rayon total de la pale R. Cette disposition contribue à l'apparition de tourbillons intenses et stables qui repoussent la limite de décrochage, en particulier lorsque la pale est en position reculante. Cependant, ce concept qui concentre la surface de pale vers son extrémité revient à réduire la partie efficace du rotor à un anneau périphérique. Cela rend le flux induit moins homogène, et, par conséquent, la puissance induite augmente, ce qui est particulièrement néfaste au décollage.

b) Mise en flèche de la partie d'extrémité libre de la pale.

De plus, afin de reculer le seuil d'apparition des ondes de chocs et de limiter leur intensité, il est avantageux de courber l'extrémité libre de la pale vers l'arrière. L'angle de flèche $\Lambda$, défini par la ligne des foyers aérodynamiques (environ au quart avant de la corde) et l'axe de variation de pas, réduit le nombre de Mach effectif, et, ainsi, la mise en flèche de l'extrémité libre de la pale constitue un moyen efficace pour diminuer les conséquences défavorables de la compressibilité de l'air, notamment l'apparition d'ondes de choc. Une telle mise en flèche de l'extrémité de la pale est illustrée notamment par les brevets FR-2 311 713, FR-2 473 983 et FR-2 617 118, et est effectivement utilisée sur certains hélicoptères.

Cependant, l'amplitude de l'angle de flèche et l'étendue en envergure de la zone d'extrémité concernée sont en fait limitées par les efforts de torsion qui résultent du déport vers l'arrière de la portance aérodynamique, ainsi que du centre de gravité.

Dans le brevet FR-2 311 713, on propose de déporter vers l'avant une partie de la pale de façon à équilibrer le déport vers l'arrière de son extrémité. Cela permet d'étendre la zone en flèche sur une partie plus importante de l'envergure. Toutefois, le raccordement de la portion du bord d'attaque en déport vers l'avant avec la partie interne de la pale s'effectue de façon brutale, et le tourbillon engendré par ce raccordement provoque le décrochage prématuré des profils plus proches du moyeu du rotor. A grande vitesse, la forme concave du bord d'attaque au niveau du raccordement focalise et renforce localement les ondes de choc, ce qui risque de réduire, voire d'annuler, les effets bénéfiques de la mise en flèche.

Dans le brevet FR-2 397 328, on préconise également le déport vers l'avant du bord d'attaque, mais dans un but différent. Il ne s'agit pas ici de réduire les efforts de torsion, mais de provoquer une déformation élastique de la pale, de façon contrôlée et que l'on suppose favorable.

c) Répartition du vrillage des profils.

Outre la répartition radiale de la longueur de corde et la mise en flèche de l'extrémité externe, la répartition du vrillage des sections élémentaires d'une pale intervient également dans l'amélioration des performances de cette dernière. Le vrillage d'une pale consiste à faire varier le calage des profils le long de l'envergure de la pale, de sorte que l'extrémité externe de la pale attaque l'air sous une incidence relativement faible, et le pied de pale sous une incidence plus forte. Cela permet de répartir la portance de façon plus uniforme sur toute la surface du rotor et de réduire ainsi la puissance absorbée en vol stationnaire.

Le vrillage est donc caractérisé par la différence de calage entre les deux extrémités de la pale. Cependant, on sait qu'un fort vrillage peut amener l'extrémité externe de la pale à porter négativement (vers le bas) en position avançante lorsque l'aéronef à voilure tournante se déplace à grande vitesse. Les performances s'en trouvent dégradées et, surtout, les vibrations augmentent fortement.

Le choix du vrillage résulte donc d'un compromis entre, d'une part, le vol stationnaire et les basses vitesses qui exigent un fort vrillage, et, d'autre part, le vol d'avancement pour lequel un vrillage plus modéré est souhaitable.

Par souci de simplicité, la répartition radiale du vrillage est souvent linéaire, de sorte que le vrillage total suffit à définir le calage de toutes les sections élémentaires.

Toutefois, afin d'améliorer les performances, dans le brevet FR-2 636 593, on propose de réaliser un vrillage non linéaire consistant à survriller l'extrémité externe de la pale, par exemple entre 85 et 100% du rayon total de la pale R. Cela a pour effet de réduire l'intensité du tourbillon marginal, voire d'annuler celui-ci, pour un niveau de portance donné, de sorte que les performances à basse vitesse sont améliorées et que les bruits d'interaction pale/tourbillon en descente sont atténués. Cependant, cette disposition ne permet pas de repousser les limites de décrochage, et les gains en puissance décroissent à grande vitesse.

d) Mise en dièdre de la partie d'extrémité libre de la pale.

De façon classique, les pales sont construites de sorte que le foyer des profils, défini généralement comme le point de mi-épaisseur au quart avant de la corde, reste sensiblement situé sur l'axe de variation de pas, et cela tout le long de l'envergure. Par ailleurs, une mise en flèche de l'extrémité libre de la pale s'effectue généralement par déplacement du foyer dans le plan défini, d'une part, par l'axe de variation de pas et, d'autre part, par la direction de la corde du profil dans la zone d'extrémité.

Dans le brevet FR-2 617 118, on décrit un perfectionnement à cette construction classique, consistant à inscrire la ligne des foyers dans un plan passant par l'axe de variation de pas, mais de façon inclinée par rapport à la corde, de sorte que le foyer des profils à l'extrémité externe de la pale est situé sensiblement plus bas que la partie interne de la pale. Le tourbillon marginal engendré par l'extrémité externe d'une pale est ainsi éloigné de la pale suivante, ce qui a pour conséquence de diminuer l'intensité de l'interaction, en particulier en vol stationnaire. Il en résulte une nette diminution de la puissance absorbée par le rotor, notamment en vol stationnaire et à basse vitesse.

Cette façon de faire est désignée par le terme "mise en dièdre" de l'extrémité de pale, bien que, dans le brevet FR-2 617 118, on effectue un déplacement progressif (de type parabolique) du foyer, et non une simple "cassure".

On voit donc qu'aucun des documents ci-dessus ne décrit une structure de pale entièrement dépourvue d'inconvénients, et la présente invention, dans ce contexte, concerne une pale pour voilure tournante, à extrémité en flèche, dont la géométrie est définie de façon optimale pour garantir les meilleures performances.

A cet effet, la pale à extrémité en flèche pour voilure tournante d'aéronef, destinée à faire partie d'un rotor dont le moyeu est lié à ladite pale, laquelle est susceptible d'être entraînée en rotation autour de l'axe dudit moyeu, ladite pale comportant un bord d'attaque et un bord de fuite, et étant formée de sections transversales élémentaires successives, identifiées par la distance séparant chacune d'entre elles de l'axe de rotation dudit moyeu, et présentant, chacune, un profil de corde déterminée et un foyer aérodynamique dont le déport par rapport à l'axe de variation de pas, orthogonal à chacune desdites sections, détermine la flèche de ladite pale, est remarquable, selon l'invention, en ce que, ladite pale étant subdivisée, le long de son étendue longitudinale, en quatre zones, à savoir une première zone s'étendant du bord interne de la pale à une première section située entre 75% et 87% de la longueur totale de la pale, comptée à partir de l'axe de rotation du moyeu, une deuxième zone s'étendant de la première section à une deuxième section située entre 87% et 93% de la longueur totale de la pale, une troisième zone s'étendant de la deuxième section à une troisième section située entre 93% et 97% de la longueur totale de la pale, et une quatrième zone s'étendant de la troisième section au bord externe libre de la pale, la longueur de la corde L croît de façon généralement linéaire dans ladite première zone, évolue suivant une fonction cubique dans ladite deuxième zone, est constante dans ladite troisième zone, et évolue suivant une fonction parabolique dans ladite quatrième zone de sorte que la pale présente un double effilement vers les bords interne et externe de cette dernière, la variation de la longueur de la corde étant telle que le bord d'attaque et le bord de fuite de la pale, le long de son étendue longitudinale, ne présentent aucune cassure, et le déport Y'f du foyer aérodynamique par rapport à l'axe de variation de pas varie de façon linéaire dans ladite première zone de sorte que le foyer aérodynamique soit déporté vers le bord d'attaque dans cette zone, évolue suivant une fonction cubique dans ladite deuxième zone, varie de façon linéaire dans ladite troisième zone, et évolue suivant une fonction parabolique dans ladite quatrième zone de façon que la pale présente une flèche vers l'arrière, la variation du déport du foyer aérodynamique étant telle que le bord d'attaque et le bord de fuite de la pale, le long de son étendue longitudinale, ne présentent aucune cassure.

Ainsi, la variation de la longueur de la corde et l'évolution du déport du foyer aérodynamique, le long de l'étendue longitudinale de la pale, sont telles que le bord d'attaque de la pale ne comporte que des parties convexes ou rectilignes, mais non concaves (pas de point d'inflexion en vue de dessus), et son bord de fuite des parties concaves ou rectilignes, mais non convexes (pas de point d'inflexion en vue de dessus). Cela permet, notamment, d'éviter le phénomène de focalisation des chocs provoqué par une concavité locale du bord d'attaque. Par ailleurs, l'élimination ou la réduction des chocs sur l'extrémité de la pale est obtenue par une mise en flèche importante dont l'effet est amplifié par une grande longueur de corde dans cette zone.

L'équilibre des forces aérodynamiques autour de l'axe de variation de pas est assuré en déplaçant le foyer aérodynamique en avant de l'axe de pas (vers le bord d'attaque) sur toute la partie interne de la pale (première zone), la variation de la longueur de la corde et l'évolution du déport du foyer aérodynamique étant telles que le foyer global de la pale se situe au moins sensiblement sur l'axe de pas. Cette disposition géométrique facilite l'équilibrage massique, le centre de gravité global pouvant également être placé au moins sensiblement sur l'axe de pas en ajoutant une très faible masse passive, voire aucune telle masse. Le foyer global et le centre de gravité global étant tous deux situés au moins sensiblement sur ledit axe, les efforts de torsion au niveau du pied de pale, ainsi que les efforts de commande (biellettes, plateaux cycliques, compas, vérins), sont minimisés.

La partie interne de la pale (première zone) qui participe peu à la portance, mais représente une part importante de la masse, est réduite par diminution progressive de la corde vers le pied de pale ("effilement du pied"), autant que te permet la résistance des matériaux disponibles. La progressivité de cette diminution garantit qu'aucun tourbillon concentré n'apparaîtra à la jonction avec le partie plus large de la pale. Un tel tourbillon est en effet rendu inutile, la limite du décrochage étant repoussée non pas par cet artifice, mais plutôt par l'utilisation d'une loi de vrillage particulière, comme on te verra par la suite.

Avantageusement, la variation de la longueur L de la corde par rapport à la longueur moyenne $\bar{L}$ de celle-ci est comprise entre des limites inférieure ABCD et supérieure EFGH, telles que les coordonnées des points A, B, C et D sont les suivantes :

$$A \begin{vmatrix} r/R=0 \\ L/\bar{L}=0,60 \end{vmatrix} \quad B \begin{vmatrix} r/R=0,87 \\ L/\bar{L}=1,05 \end{vmatrix} \quad C \begin{vmatrix} r/R=0,93 \\ L/\bar{L}=1,05 \end{vmatrix} \quad D \begin{vmatrix} r/R=1 \\ L/\bar{L}=0,25 \end{vmatrix}$$

les lignes joignant ces points pour former la limite ABCD étant des segments de droite à l'exception du segment CD de forme parabolique défini par :

$$L(r/R)/\overline{L} = 1{,}05 - 0{,}80\, x^2$$

$$\text{avec } x = (r/R - 0{,}93)/0{,}07$$

et les coordonnées des points E, F, G et H sont les suivantes :

$$E\begin{vmatrix} r/R=0 \\ L/\overline{L}=0{,}75 \end{vmatrix} \qquad F\begin{vmatrix} r/R=0{,}87 \\ L/\overline{L}=1{,}20 \end{vmatrix} \qquad G\begin{vmatrix} r/R=0{,}97 \\ L/\overline{L}=1{,}20 \end{vmatrix} \qquad H\begin{vmatrix} r/R=1 \\ L/\overline{L}=0{,}45 \end{vmatrix}$$

les lignes joignant ces points pour former la limite EFGH étant des segments de droite à l'exception du segment GH de forme parabolique défini par :

$$L(r/R)/\overline{L} = 1{,}20 - 0{,}75\, x^2$$

$$\text{avec } x = (r/R - 0{,}97)/0{,}03.$$

Dans ces limites, par rapport à la longueur moyenne $\overline{L}$ de la corde, la longueur L de la corde varie, de préférence, sur l'étendue longitudinale de la pale, de la façon suivante :

.    r étant la distance d'une section transversale élémentaire de paie à l'axe de rotation du moyeu ;
.    R0 étant la distance du bord interne de la pale à l'axe de rotation du moyeu ;
.    R1 étant la distance de l'extrémité externe de ladite première zone à l'axe de rotation du moyeu ;
.    R2 étant la distance de l'extrémité externe de ladite deuxième zone à l'axe de rotation du moyeu ;
.    R3 étant la distance de l'extrémité externe de ladite troisième zone à l'axe de rotation du moyeu ; et
.    R étant la distance du bord externe de la pale à l'axe de rotation du moyeu.

a) première zone de R0 à R1 :
linéairement de L0 = 0,778400 $\overline{L}$ à L1 = 1,095054 $\overline{L}$
b) deuxième zone de R1 à R2 :
de L1 à L2 = 1,104833 $\overline{L}$ suivant la fonction :

$$L(r/R)/\overline{L} = 1{,}103203 + 0{,}001630\, x^3 - 0{,}008149\, (1-x)^3 + 0{,}004889\, x\, (1 - x)\, (2x - 1)$$

dans laquelle :

$$x = (r - R1) / (R2 - R1)$$

c) troisième zone de R2 à R3 :
de L2 = 1,104833 $\overline{L}$ à L3 = L2, en restant constante
d) quatrième zone de R3 à R :
de L3 = 1,104833 $\overline{L}$ à L4 = 0,351543 $\overline{L}$,
suivant la fonction :

$$L(r/R)/\overline{L} = 1{,}104833 - 0{,}753290\, x^2$$

dans laquelle :

$$x = (r - R3)/(R-R3).$$

Par ailleurs, le déport $Y'f$ du foyer aérodynamique par rapport à l'axe de variation de pas peut être compris entre des limites inférieure A'B'C'D' et supérieure E'F'G'H', telles que les coordonnées des points A', B', C' et D' sont les suivantes :

$$A'\begin{vmatrix} r/R=0 \\ Y'f=0 \end{vmatrix} \qquad B'\begin{vmatrix} r/R=0{,}87 \\ Y'f=0{,}00435R \end{vmatrix} \qquad C'\begin{vmatrix} r/R=0{,}93 \\ Y'f=-0{,}03165R \end{vmatrix} \qquad D'\begin{vmatrix} r/R=1 \\ Y'f=-0{,}11916R \end{vmatrix}$$

les lignes joignant ces points pour former la limite A'B'C'D' étant des segments de droite, à l'exception du segment C'D' de forme parabolique défini par :

$$Y'f(r/R)/R = - 0{,}03165 - 0{,}04200\, x - 0{,}04551\, x^2$$

$$\text{avec } x = (r/R - 0{,}93)/0{,}07$$

et les coordonnées des points E', F', G' et H' sont les suivantes :

$$E' \begin{vmatrix} r/R=0 \\ Y'f=0 \end{vmatrix} \qquad F' \begin{vmatrix} r/R=0{,}87 \\ Y'f=0{,}02610R \end{vmatrix} \qquad G' \begin{vmatrix} r/R=0{,}97 \\ Y'f=-0{,}00390R \end{vmatrix} \qquad H' \begin{vmatrix} r/R=1 \\ Y'f=-0{,}05557R \end{vmatrix}$$

les lignes joignant ces points pour former la limite E'F'G'H' étant des segments de droite, à l'exception de G'H' de forme parabolique défini par :

$$Y'f(r/R)/R = -0{,}00390 - 0{,}00900\,x - 0{,}04267\,x^2$$

$$\text{avec } x = (r/R - 0{,}97)/0{,}03.$$

Dans ces limites, le déport $Y'f$ du foyer aérodynamique par rapport à l'axe de variation de pas évolue, de préférence, sur l'étendue longitudinale de la pale, de la façon suivante :

- $r$ étant la distance d'une section transversale élémentaire de pale à l'axe de rotation du moyeu ;
- $R0$ étant la distance du bord interne de la pale à l'axe de rotation du moyeu ;
- $R1$ étant la distance de l'extrémité externe de ladite première zone à l'axe de rotation du moyeu ;
- $R2$ étant la distance de l'extrémité externe de ladite deuxième zone à l'axe de rotation du moyeu ;
- $R3$ étant la distance de l'extrémité externe de ladite troisième zone à l'axe de rotation du moyeu ; et
- $R$ étant la distance du bord externe de la pale à l'axe de rotation du moyeu.

a) première zone de R0 à R1 :
linéairement de $Y0 = 0{,}0029242\,R$ à $Y1 = 0{,}012282\,R$ soit $Y'f = 0{,}014449\,r$
b) deuxième zone de R1 à R2 :
de Y1 à $Y2 = 0{,}003244\,R$ suivant la fonction :

$$Y'f(r/R)/R = 0{,}01096890 - 0{,}00772363\,x^3 + 0{,}00131353\,(1-x^3) - 0{,}00451858\,x\,(1-x)\,(2x-1)$$

dans laquelle :

$$x = (r - R1) / (R2 - R1)$$

c) troisième zone de R2 à R3 :
linéairement de Y2 à $Y3 = -0{,}024733R$
d) quatrième zone de R3 à R :
de Y3 à $Y4 = -0{,}089984R$ suivant la fonction :

$$Y'f(r/R)/R = -0{,}024733 - 0{,}023296\,x - 0{,}041955\,x^2$$

dans laquelle :

$$x = (r - R3) / (R-R3).$$

De plus, la partie d'extrémité externe de la pale présentant une courbure vers le bas au moins approximativement d'allure parabolique, selon l'invention, le déplacement vertical $Zv$ du centre de vrillage par rapport au plan de portance nulle de la pale, tel que défini ultérieurement, est compris entre des limites inférieure A"B"C"D" et supérieure E"F"G"H", telles que les coordonnées des points A", B", C" et D" sont les suivantes :

$$A'' \begin{vmatrix} r/R=0 \\ Zv/R=-0{,}001 \end{vmatrix} \qquad B'' \begin{vmatrix} r/R=0{,}87 \\ Zv/R=-0{,}001 \end{vmatrix} \qquad C'' \begin{vmatrix} r/R=0{,}93 \\ Zv/R=-0{,}001 \end{vmatrix} \qquad D'' \begin{vmatrix} r/R=1 \\ Zv/R=-0{,}015 \end{vmatrix}$$

les lignes joignant ces points pour former la limite A"B"C"D" étant des segments de droite à l'exception du segment C"D" de forme parabolique défini par :

$$Zv(r/R)/R = -0{,}001 - 0{,}014\,x^2$$

$$\text{avec } x = (r/R - 0{,}93)/0{,}07$$

et les coordonnées des points E", F", G" et H" sont les suivantes :

$$E'' \begin{vmatrix} r/R=0 \\ Zv/R=+0,001 \end{vmatrix} \qquad F'' \begin{vmatrix} r/R=0,87 \\ Zv/R=+0,001 \end{vmatrix} \qquad G'' \begin{vmatrix} r/R=0,97 \\ Zv/R=+0,001 \end{vmatrix} \qquad H'' \begin{vmatrix} r/R=1 \\ Zv/R=-0,005 \end{vmatrix}$$

les lignes joignant ces points pour former la limite E"F"G"H" étant des segments de droite, à l'exception du segment G"H" de forme parabolique défini par :

$$Zv(r/R)/R = +\ 0,001 - 0,006\ x^2$$

$$\text{avec } x = (r/R - 0,97)/0,003.$$

Dans ces limites, avantageusement, le déplacement vertical Zv du centre de vrillage par rapport au plan de portance nulle de la pale est tel que le centre de vrillage reste sensiblement dans ledit plan dans lesdites première, deuxième et troisième zones, et dans la quatrième zone :

$$Zv(r/R)/R = -\ 0,0905\ x^2$$

$$\text{avec } x = (r - R3)\ /\ (R - R3).$$

De préférence, lesdites première, deuxième, troisième et quatrième zones sont définies par :
R0 = 0,202380R, R1 = 0,850000R, R2 = 0,890000R et R3 = 0,950000R.

Par ailleurs, avantageusement, dans la zone R0 à RI = 0,40 à 0,50 R, de préférence 0,46 R, de la pale et dans la zone RII = 0,75 à 0,85 R, de préférence 0,80 R, à R de la pale, le calage aérodynamique est linéairement variable avec le rayon r et son taux de variation, avantageusement, est au moins sensiblement égal à -12° divisé par le rayon R, tandis que, dans la zone centrale RI à RII, le taux de variation du calage aérodynamique, également constant, est égal à 1,5 fois le taux de variation du calage aérodynamique des zones R0 à RI et RII à R, avantageusement au moins sensiblement égal à -18° divisé par le rayon R.

En survrillant ainsi la partie centrale de la pale (RI à RII), on peut mieux exploiter le domaine de fonctionnement sûr des profils, en réduisant la portance maximale demandée en position reculante, et en l'augmentant dans une zone où une marge importante est disponible, à savoir dans la partie centrale de la pale avançante. Dans le cas d'un vol rapide, l'extrémité de la pale avançante déporte, mais le survrillage n'aggrave pratiquement pas ce phénomène, tandis que le gain du côté de la pale reculante est considérable. Globalement, la puissance demandée par le rotor décroît d'environ 10% dans ce cas de vol.

Cela traduit un recul de la limite de décrochage du rotor, dont les autres effets bénéfiques sont : la réduction des contraintes dynamiques dans les pales, le moyeu, et la chaîne de commande, et la réduction des vibrations.

Par ailleurs, l'intensité de l'interaction pale-tourbillon est diminuée grâce, d'une part, au déplacement vers le bas du tourbillon marginal et, d'autre part, à la réduction de l'intensité du tourbillon. Le déplacement du tourbillon est assuré, en partie, par le déplacement des profils sous le plan de portance nulle de la pale et, en partie, grâce au recul important du bord de fuite, ce qui produit aussi un déplacement vers le bas du tourbillon par rotation de la pale autour de l'axe de pas. La réduction de l'intensité du tourbillon est obtenue par une diminution de la corde, progressive mais notable, dans la partie d'extrémité externe de la pale ("saumon"). Cet effilement particulier offre pour avantage supplémentaire de réduire la masse dans la zone la plus éloignée de l'axe de pas, facilitant ainsi l'équilibrage inertiel.

Les figures du dessin annexé feront bien comprendre comment l'invention peut être réalisée. Sur ces figures, des références identiques désignent des éléments semblables.

La figure 1 est une vue schématique en perspective d'une pale de rotor d'hélicoptère conforme à la présente invention.

Les figures 2 et 3 illustrent, en vue de dessus, deux exemples de réalisation de la pale selon l'invention.

La figure 4 est une courbe montrant la variation de la longueur de la corde le long de l'étendue longitudinale de la pale.

La figure 5 est une courbe montrant l'évolution du déport du foyer aérodynamique le long de l'étendue longitudinale de la pale.

La figure 6 est une courbe montrant le déplacement vertical du centre de vrillage par rapport au plan de construction, tel que défini par la suite, de la pale.

La figure 7 est une courbe montrant la variation du calage aérodynamique le long de l'étendue longitudinale de la pale.

Les figures 8a à 8c montrent des sections élémentaires de la pale en différentes positions de son étendue longitudinale.

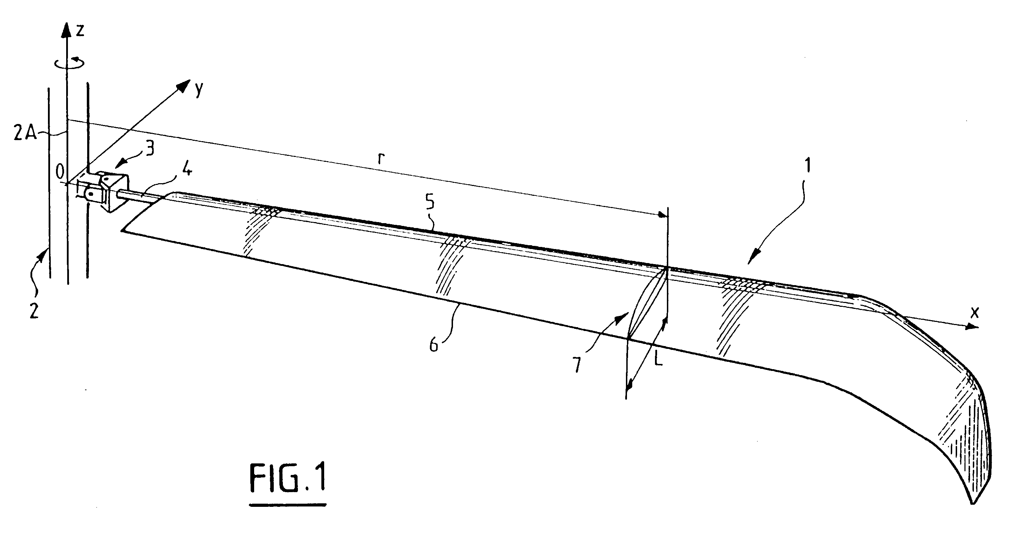

La pale 1 à extrémité en flèche, conforme à la présente invention et montrée par la figure 1, fait partie d'un rotor dont le moyeu 2 est illustré de façon purement schématique et dont les autres pales ne sont pas représentées. La pale 1 est liée au moyeu 2 par des organes 3 d'articulation et de retenue de la pale, particulièrement une articulation de changement de pas pour la pale autour d'un axe 4 dit de variation commandée de pas, comme cela est usuel.

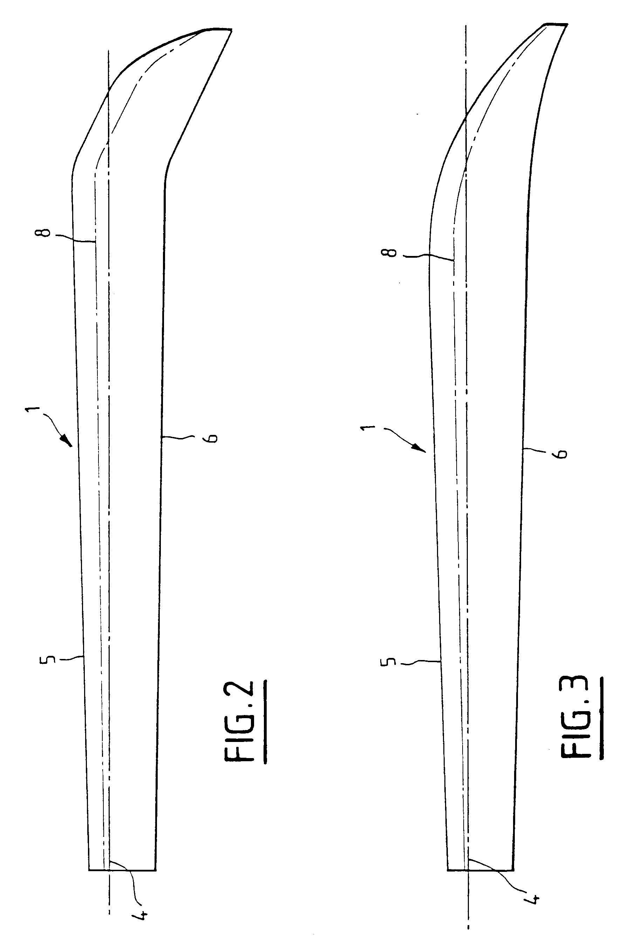

Par ailleurs, la pale 1, comportant un bord d'attaque 5 et un bord de fuite 6, est formée de sections transversales élémentaires successives, dont une 7 est représentée sur la figure 1. Chaque section élémentaire 7 est identifiée par la distance r séparant ladite section de l'axe de rotation 2A du moyeu 2, et présente un profil de corde L déterminée, et un foyer aérodynamique (point d'application des variations des forces de portance aérodynamique), dont la "courbe" le long de l'étendue longitudinale de la pale est représentée en 8 sur les figures 2 et 3. Le déport du foyer aérodynamique par rapport à l'axe de variation de pas 4, orthogonal auxdites sections successives 7, détermine la flèche de la pale, comme on le voit mieux sur les figures 2 et 3.

On décrira ci-après la construction géométrique permettant de définir rigoureusement la surface d'une pale 1 selon l'invention.

Le référentiel de construction est choisi comme étant un trièdre orthonormé dont l'origine 0 est le centre du rotor.

L'axe 0X est l'axe de variation de pas 4, de sorte que la première coordonnée coïncide avec le rayon r compté à partir du centre de rotation 0. Le deuxième axe OY, orthogonal à l'axe OX, constitue la direction de référence de calage, et est dirigé, arbitrairement, vers le bord d'attaque 5. Le troisième axe OZ est orthogonal au plan défini par les axes OX et OY, et est dirigé, arbitrairement, vers le haut (extrados des profils). Le trièdre est de sens direct si le rotor tourne dans le sens anti-horaire. Il est bien entendu, toutefois, que tout ce qui suit reste valable pour un rotor tournant en sens horaire.

Le plan OX,OY sera appelé plan de construction ou plan de référence. Le plan OX,OY sera choisi de façon à coïncider avec le plan de portance nulle de la pale défini ultérieurement. La surface de la pale (enveloppe de la pale) est engendrée par un ensemble de sections planes élémentaires 7 qui sont toutes parallèles les unes aux autres et au plan OY,OZ et orthogonales à l'axe de variation de pas OX.

Chaque section élémentaire peut être identifiée par son rayon r (distance de la section à l'axe OY), compris entre R0 (début de la partie empennée) et R (extrémité externe de la pale).

Les paramètres définissant le contour d'une section transversale élémentaire quelconque 7 de la pale 1 sont les suivants :

- la longueur de la corde L, comptée perpendiculairement à l'axe de pas ($\bar{L}$ étant la longueur moyenne de la corde pondérée en $r^2$) ;
- le déplacement du foyer aérodynamique F par rapport au centre de vrillage V parallèlement à la corde $\Delta Yf$, Yf et Zf étant les coordonnées du foyer F (généralement situé au quart avant de la corde et à mi-épaisseur) dans le repère de construction, et $\bar{Y}$ désignant, par la suite, la position en corde du foyer global ; et Y'f étant la position du foyer rabattu sur le plan de construction (sans vrillage) ;
- la position du centre de vrillage V, donnée par ses coordonnées Yv et Zv dans le repère de construction ;
- le calage géométrique $\theta g$ compté par rapport à la direction OY, positif à cabrer, et déduit du calage aérodynamique $\theta a$ par la relation :

$$\theta g = \theta a + \alpha o$$

dans laquelle $\alpha o$ est l'incidence de portance nulle de la section élémentaire (en fait, le calage à considérer n'est pas le calage géométrique $\theta g$, mais plutôt le calage aérodynamique $\theta a$ compté par rapport à la direction de portance nulle de la section. L'écart $\theta g$-$\theta a$ est égal à l'incidence de portance nulle $\alpha o$ du profil de la section considérée. Cet écart est nul pour les profils symétriques, aujourd'hui abandonnés, et la distinction entre $\theta a$ et $\theta g$ est essentielle pour les profils modernes. Les lois de vrillage considérées dorénavant, linéaires ou non, se rapportent donc au calage aérodynamique $\theta a$) ;

- le contour du profil générique, décrit par un jeu d'équations, ou bien par une table numérique.

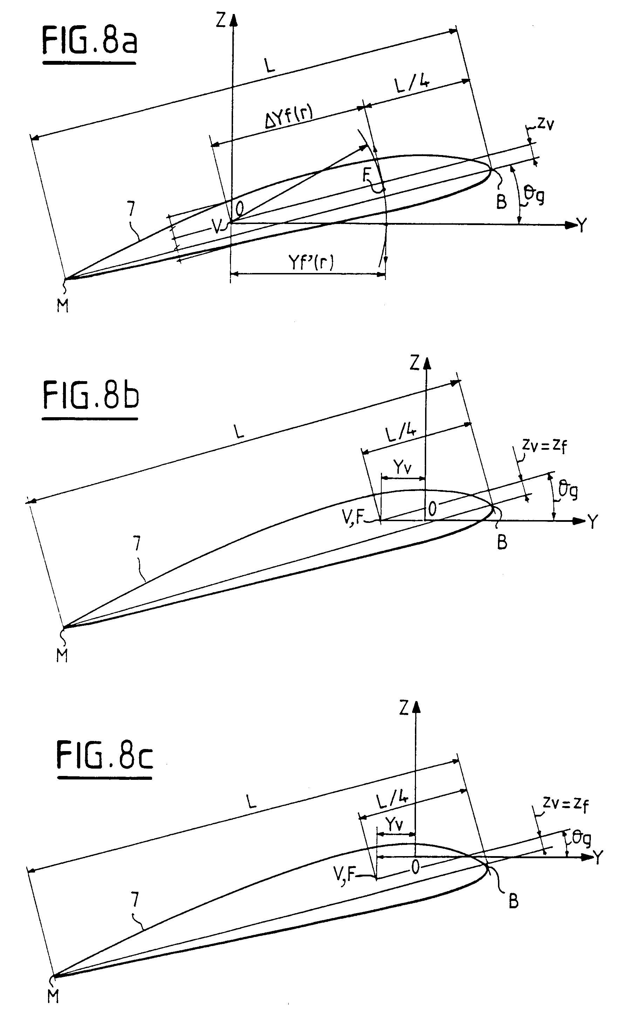

Les figures 8a, 8b et 8c représentent des sections particulières telles que décrites par la suite.

La position du foyer F, du bord d'attaque B et celle du bord de fuite M sont déduites des relations :

$$F \begin{vmatrix} Yf = Yv + \Delta Yf \cos \theta g - \Delta Zf \sin \theta g \\ Zf = Zv + \Delta Zf \cos \theta g + \Delta Yf \sin \theta g \end{vmatrix}$$

$$B \begin{vmatrix} Yb = Yv + \Delta Yb \cos \theta g - \Delta Zb \sin \theta g \\ Zb = Zv + \Delta Zb \cos \theta g + \Delta Yb \sin \theta g \end{vmatrix}$$

$$M \begin{vmatrix} Ym = Yv + \Delta Ym \cos \theta g - \Delta Zm \sin \theta g \\ Zm = Zv + \Delta Zm \cos \theta g + \Delta Ym \sin \theta g \end{vmatrix}$$

avec

$$\Delta Yb = \Delta Yf + 1/4 \; L$$

$$\Delta Ym = \Delta Yf - 3/4 \; L$$

et

$$\Delta Zf = zf - zv$$

$$\Delta Zb = \Delta Zm = -zv,$$

zv et zf étant les distances des points V et F à la corde de référence (mi-épaisseur du profil aux abscisses $\Delta Yb$ et $\Delta Yf$). $\Delta Yf$ et $\Delta Zf$ représentent la position du foyer par rapport au centre de vrillage dans les axes liés au profil.

Le foyer aérodynamique peut être défini comme le point d'application des variations de portance relatives à une variation d'incidence. Il se situe, généralement, à proximité du quart de corde à compter du bord d'attaque.

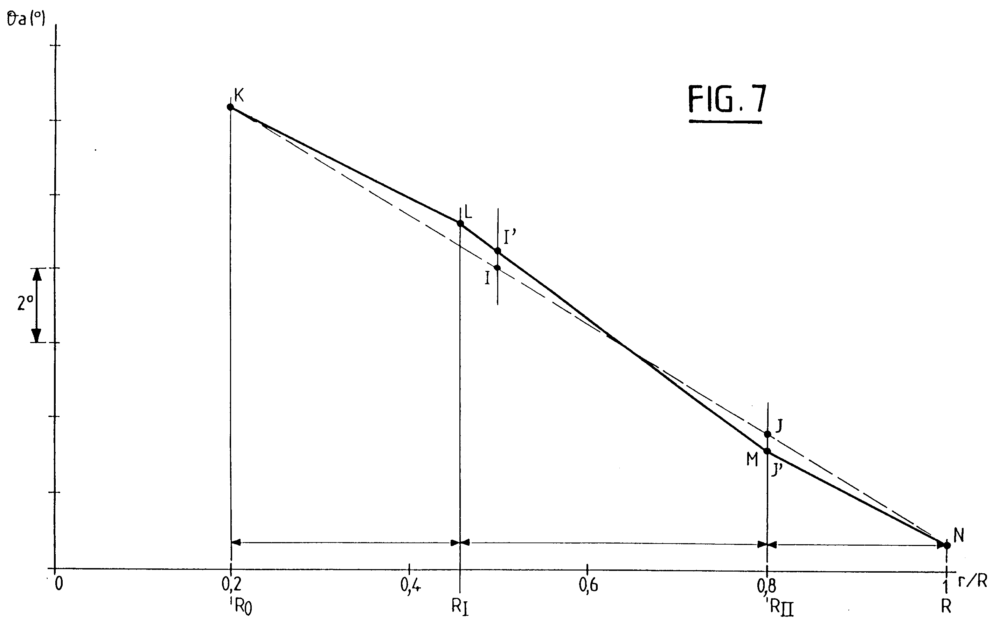

Le calage aérodynamique $\theta a$ est défini, généralement, à une constante additive près (figure 7). Une méthode permettant de déterminer cette constante, et donc de positionner les sections par rapport au plan OX,OY, de façon à faire correspondre celui-ci au plan de portance nulle (portance aérodynamique totale identiquement nulle de la pale 1 si la rotation de cette pale se fait autour de l'axe OZ et si le vol est stationnaire), est la suivante :

- on calcule l'intégrale :

$$SN = \int_{R0}^{R} \theta a(r).L(r).r^2.dr$$

qui peut être positive ou négative ;
- on calcule l'intégrale :

$$SD = \int_{R0}^{R} L(r).r^2.dr$$

- on retranche à $\theta a(r)$ la constante SN/SD, de sorte que l'expression

$$\int_{R0}^{R} [\theta a(r)-[SN/SD]].L(r).r^2.dr$$

est identiquement nulle ;
- les sections sont calées géométriquement par rapport au plan OX,OY selon l'angle pratique $\theta a(r)-[SN/SD]+\alpha o$, ce qui confère au plan OX,OY les propriétés précitées du plan de portance nulle.

La pale qui fait l'objet de l'invention est suodivisée en quatre zones, permettant de la décrire, indépendamment du vrillage qui nécessite un découpage particulier précisé ci-après. Ces quatre zones sont :

- la zone 1, dite partie interne, qui s'étend depuis la section R0, correspondant au début de la partie empennée, jusqu'à la section R1 située entre 75% et 87% du rayon total R ;
- la zone 2, dite partie de transition, qui s'étend depuis la section R1 jusqu'à la section R2 située entre 87% et 93% du rayon total R ;
- la zone 3, dite partie en flèche, qui s'étend depuis la section R2 jusqu'à la section R3 située entre 93% et 97% du rayon total R ;
- la zone 4, dite "saumon", qui s'étend depuis la section R3 jusqu'au bout libre de la pale (rayon R).

La description du vrillage nécessite un découpage en trois zones :

- la zone I qui s'étend depuis la section R0 jusqu'à la section RI située entre 40% et 50% du rayon total R ;
- la zone II (partie centrale) qui s'étend depuis la section RI jusqu'à la section RII située entre 75% et 85% du rayon total R ;
- la zone III qui s'étend depuis la section RII jusqu'au bord libre de la pale (rayon R).

A titre d'exemple de réalisation préféré, on peut définir les quatre zones 1, 2, 3 et 4 ci-dessus comme suit : R0=0,20238OR, R1=0,850000R, R2=0,890000R, R3=0,950000R.

On notera que les sections 7 représentées sur les figures 8a, 8b et 8c sont telles que :

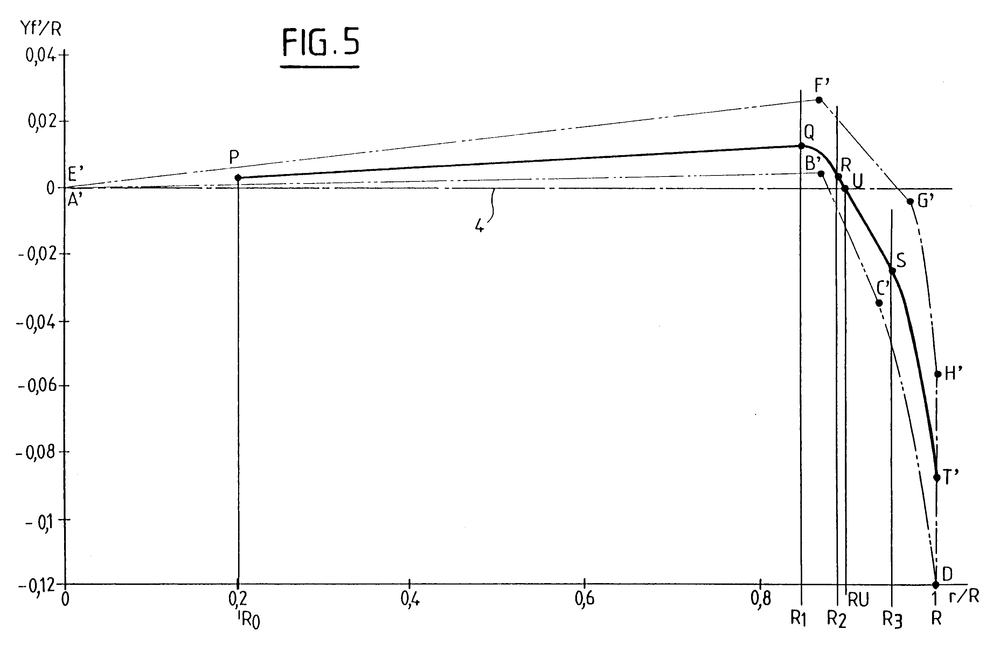

- pour la figure 8a : $r \leq RU$, le point U est défini sur la figure 5 et le point V est disposé, dans le cas présent, sur l'axe OX et à mi-épaisseur du profil ;
- pour la figure 8b : $RU < r \leq R3$, alors les points F et V sont confondus quand ils sont à mi-épaisseur du profil ($Zv=Zf$) et se situent dans le plan OX,OY ;
- pour la figure 8c : $r > R3$, les points F et V restent confondus quand ils sont disposés à mi-épaisseur du profil mais se situent sous le plan OX,OY.

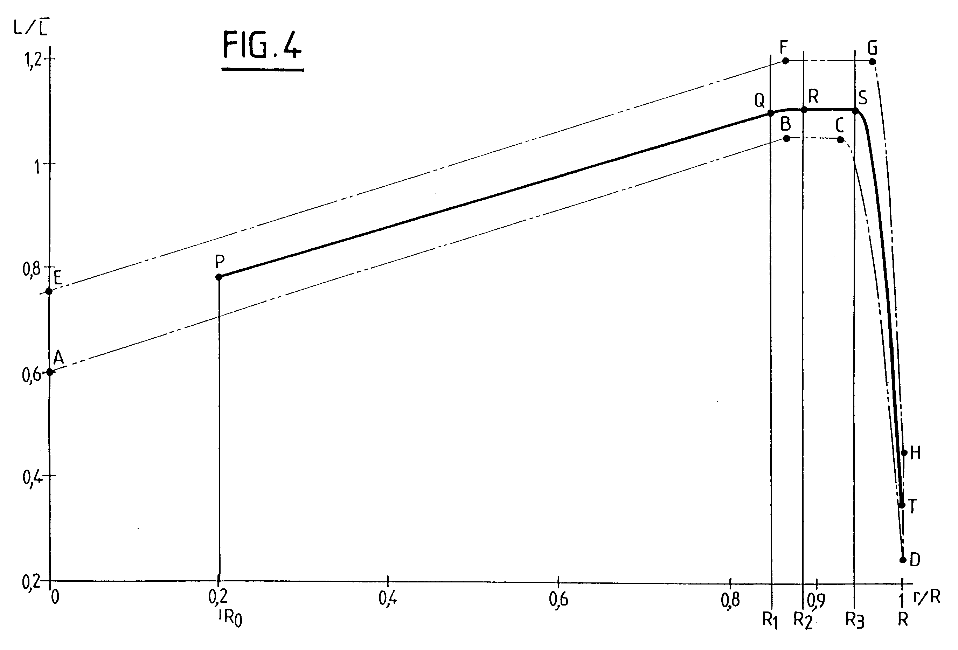

La loi de corde évolue selon la courbe PQRST de la figure 4 (évolution de la corde L par rapport à la corde moyenne $\overline{L}$ le long de l'envergure de la pale) :

- segment PQ (zone 1) : l'évolution est linéaire depuis $L0 = 0,778400 \overline{L}$ jusqu'à $L1 = 1,095054 \overline{L}$
- segment QR (zone 2) : l'évolution est cubique depuis L1 jusqu'à $L2 = 1,104833\overline{L}$, suivant la fonction :

$$L(r/R)/\overline{L} = 1,103203 + 0,001630\, x^3 - 0,008149(1-x)^3 + 0,004889\, x\, (1-x)\, (2x-1)$$

$$\text{où } x = (r - R1) / (R2 - R1)$$

- segment RS (zone 3) : la corde est constante et égale à $L2 = L3 = 1,104833 \overline{L}$
- segment ST (zone 4) : l'évolution est parabolique depuis $L3 = 1,104833 \overline{L}$ jusqu'à $L4 = 0,351543 \overline{L}$, suivant la fonction :

$$L(r/R)/\overline{L} = 1,104833 - 0,753290\, x^2$$

$$\text{où } x = (r-R3)/(R-R3).$$

Les expressions ci-dessus sont choisies de façon à assurer une évolution continue de la dérivée dL/dr, condition nécessaire pour que le bord d'attaque 5 et le bord de fuite 6 de la pale 1 ne présentent aucune cassure.

Le déport du foyer aérodynamique F par rapport à l'axe de variation de pas détermine l'angle de flèche local :

$$\Lambda = tg^{-1} (dY'f/dr).$$

Sur la figure 5, le déport du foyer est défini par son rabattement sur le plan de construction OX,OY, soit $Y'f = Yv + \Delta Yf$, qui évolue selon la courbe PQRST :

- segment PQ (zone 1) : l'évolution est linéaire depuis $Y0 = 0,0029242\, R$ jusqu'à $Y1 = 0,012282\, R$ soit :

$$Y'f = 0,014449\, r$$

- segment QR (zone 2) : l'évolution est cubique depuis Y1 jusqu'à $Y2 = 0,003244R$ suivant la fonction :

$$Y'f(r/R)/R = 0,01096890 - 0,00772363x^3 + 0,00131353(1-x^3) - 0,00451858x(1-x)(2x-1)$$

dans laquelle :

$$x = (r-R1) / (R2-R1)$$

- segment RS (zone 3) : l'évolution est linéaire de Y2 à $Y3 = -0,024733R$ (cela correspond à un angle de flèche constant $\Lambda = 25°$)
- segment ST (zone 4) : l'évolution est parabolique de Y3 à $Y4 = -0,089984R$ suivant la fonction :

$$Y'f(r/R)/R = -0,024733 - 0,023296x - 0,041955\, x^2$$

dans laquelle :

$$x = (r-R3)/(R-R3).$$

Les expressions ci-dessus sont choisies de façon à assurer une évolution continue de la dérivée dY'f/dr, condition nécessaire pour que le bord d'attaque et le bord de fuite de la pale ne présentent aucune "cassure".

De plus, grâce aux choix des paramètres ci-dessus, le foyer global de la pale, point d'application des variations de portance, et défini par sa position $\overline{Y}$ par rapport à l'axe de pas :

$$\overline{Y} = \frac{\int\limits_{R0}^{R} Y'f(r)\, L(r)r^2\, dr}{\int\limits_{R0}^{R} L(r)r^2\, dr} = \frac{\int\limits_{R0}^{R} Y'f(r)\, L(r)r^2\, dr}{\overline{L}\int\limits_{R0}^{R} r^2\, dr}$$

se trouve quasiment confondu avec l'axe de pas :

$\overline{Y} = -0{,}0008R$, de sorte que les efforts aérodynamiques de torsion en pied de pale, ainsi que la partie aérodynamique de l'effort sur la biellette de pas sont minimisés.

On remarquera, pour une pale à corde moyenne $\overline{L}$ fixée, qu'un autre choix de la répartition des quatre zones 1, 2, 3 et 4 précitées, mais toujours dans les limites précédemment définies, peut être associé à des paramètres convenablement déterminés pour les lois générales proposées ci-dessus pour les variations le long de l'étendue de la pale de la corde L par rapport à la corde moyenne $\overline{L}$ d'une part et le déport Y'f du foyer aérodynamique par rapport à l'axe de variation de pas d'autre part, de façon à assurer sensiblement le positionnement du foyer aérodynamique global de la pale par rapport à l'axe de variation de pas.

On notera aussi que le déport du foyer qui vaut :

$$Y'f = Yv + \Delta Yf$$

peut être obtenu par différentes combinaisons du déport du centre de vrillage Yv et du décentrement $\Delta Yf$. Toutefois, il est souhaitable de maintenir le centre de vrillage V confondu avec l'axe de variation de pas dans la zone du pied de pale et sur la plus grande partie de l'envergure, cela de façon à conserver à la pale une allure rectiligne en vue de face et à minimiser ainsi la flexion induite par la force centrifuge. En pratique, Yv sera nul depuis le pied de pale jusqu'au point d'intersection U de la ligne des foyers avec l'axe de variation de pas (figure 5). Au-delà de ce point, le centre de vrillage sera confondu avec le foyer :

$$r < RU : Yv(r) = 0,\ \Delta Yf(r) = Y'f(r)$$

$$r > RU : Yv(r) = Y'f(r),\ \Delta Yf(r) = 0$$

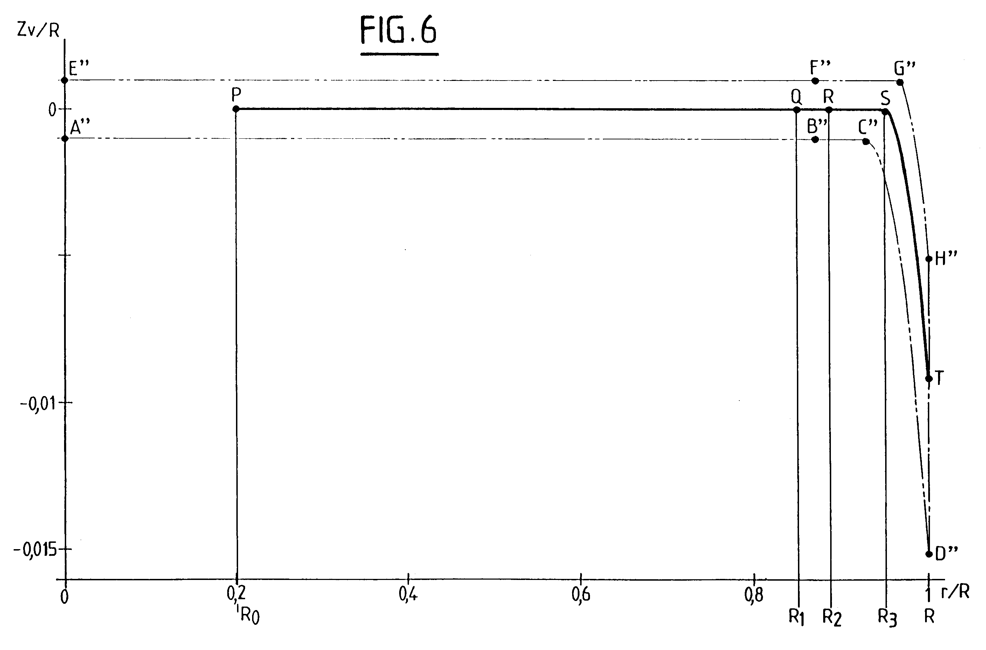

Par ailleurs, le déplacement vertical Zv du centre de vrillage V par rapport au plan de construction ci-dessus défini évolue selon la courbe PQRST de la figure 6 :

- sur les segments PQ, QR et RS (zones 1,2,3), le centre de vrillage est dans le plan de construction : Zv = 0,
- sur le segment ST (zone 4), l'évolution est parabolique depuis Zv = 0 jusqu'à Zv = -0,0905 R suivant la fonction :

$$Zv(r/R)/R = -\,0{,}0905\, x^2$$

$$\text{avec } x = (r\text{-}R3) / (R\text{-}R3).$$

Ce déplacement progressif vers le bas permet d'amener le bord de fuite d'une pale, et donc le tourbillon marginal, à une position telle que l'interaction avec la pale suivante est significativement réduite, en particulier dans les configurations de vol stationnaire et de descente.

En outre, le calage aérodynamique $\theta a$ peut être réparti selon la ligne KLMN de la figure 7. Les trois zones sont définies par les sections I et II suivantes :

$$RI = 0{,}46R \qquad RII = 0{,}80R.$$

Dans les zones I et III, le taux de vrillage est constant et peut être égal à -12° en se rapportant au rayon total R, tandis que, dans la zone II centrale (segment LM), il est constant et peut être égal à -18° en se rapportant au rayon total R, soit une augmentation de 50% par rapport aux autres zones I et III (figure 7).

En fait, pour repousser la limite de décrochage, il suffit d'augmenter le vrillage dans la partie centrale RI à RII d'environ 50% sans le modifier sur le reste de la pale. Un critère simple décrit ci-dessous permet de déterminer si une loi de vrillage donnée possède cette propriété.

Sur la figure 7, on trace la droite KN (en traits interrompus) joignant la première section empennée R0 à l'extrémité externe R, on détermine les points I et J, les intersections de cette droite KN avec les sections à 50% et 80% de R, et on détermine les points I' et J', donnant le calage aérodynamique au niveau de ces sections à 50% et 80% de R.

Le critère consiste à examiner les écarts ($\theta$I'-$\theta$I) et ($\theta$J'-$\theta$J) en les comparant à l'écart de calage entre les deux extrémités ($\theta$K-$\theta$N) :

si 0,03($\theta$K-$\theta$N) < ($\theta$I'-$\theta$I) < 0,10 ($\theta$K-$\theta$N)

et -0,10($\theta$K-$\theta$N) < ($\theta$J'-$\theta$J) <-0,03 ($\theta$K-$\theta$N)

alors la loi de vrillage examinée possède la propriété précitée.

De plus, les variations précédemment définies de la corde, du foyer aérodynamique (flèche), et du déplacement vertical du centre de vrillage (dièdre) peuvent être comprises dans les limites ABCD et EFGH, A'B'C'D' et E'F'G'H', et A"B"C"D" et E"F"G"H" des figures 4, 5 et 6, respectivement, tout en conservant les propriétés requises de la pale selon l'invention. Ces limites sont définies par les points suivants :

1) pour la loi de variation de la corde,

- limite inférieure ABCD, telle que les coordonnées des points A, B, C et D sont les suivantes :

$$A\begin{vmatrix} r/R=0 \\ L/\overline{L}=0,60 \end{vmatrix} \quad B\begin{vmatrix} r/R=0,87 \\ L/\overline{L}=1,05 \end{vmatrix} \quad C\begin{vmatrix} r/R=0,93 \\ L/\overline{L}=1,05 \end{vmatrix} \quad D\begin{vmatrix} r/R=1 \\ L/\overline{L}=0,25 \end{vmatrix}$$

les lignes joignant ces points pour former la limite ABCD sont des segments de droite, à l'exception du segment CD de forme parabolique défini par :

$$L(r/R)/\overline{L} = 1,05 - 0,80\, x^2$$

$$\text{avec } x = (r/R - 0,93)/0,07$$

- limite supérieure EFGH, telle que les coordonnées des points E, F, G et H sont les suivantes :

$$E\begin{vmatrix} r/R=0 \\ L/\overline{L}=0,75 \end{vmatrix} \quad F\begin{vmatrix} r/R=0,87 \\ L/\overline{L}=1,20 \end{vmatrix} \quad G\begin{vmatrix} r/R=0,97 \\ L/\overline{L}=1,20 \end{vmatrix} \quad H\begin{vmatrix} r/R=1 \\ L/\overline{L}=0,45 \end{vmatrix}$$

les lignes joignant ces points pour former la limite EFGH sont des segments de droite à l'exception du segment GH de forme parabolique défini par :

$$L(r/R)/\overline{L} = 1,20 - 0,75\, x^2$$

$$\text{avec } x = (r/R - 0,97)/0,03$$

2) pour la loi de variation du foyer aérodynamique

- limite inférieure A'B'C'D', telle que les coordonnées des points A', B', C' et D' sont les suivantes :

$$A'\begin{vmatrix} r/R=0 \\ Y'f=0 \end{vmatrix} \quad B'\begin{vmatrix} r/R=0,87 \\ Y'f=0,00435R \end{vmatrix} \quad C'\begin{vmatrix} r/R=0,93 \\ Y'f=-0,03165R \end{vmatrix} \quad D'\begin{vmatrix} r/R=1 \\ Y'f=-0,11916R \end{vmatrix}$$

les lignes joignant ces points pour former la limite A'B'C'D' sont des segments de droite, à l'exception du segment C'D' de forme parabolique défini par :

$$Y'f(r/R)/R = -0,03165 - 0,04200\, x - 0,04551\, x^2$$

$$\text{avec } x = (r/R - 0,93)/0,07$$

- limite supérieure E'F'G'H', telle que les coordonnées des points E', F', G' et H' sont les suivantes :

$$E'\begin{vmatrix} r/R=0 \\ Y'f=0 \end{vmatrix} \quad F'\begin{vmatrix} r/R=0,87 \\ Y'f=0,02610R \end{vmatrix} \quad G'\begin{vmatrix} r/R=0,97 \\ Y'f=-0,00390R \end{vmatrix} \quad H'\begin{vmatrix} r/R=1 \\ Y'f=-0,05557R \end{vmatrix}$$

les lignes joignant ces points pour former la limite E'F'G'H' étant des segments de droite, à l'exception de G'H' de forme parabolique défini par :

$$Y'f(r/R)/R = -0,00390 - 0,00900\, x - 0,04267\, x^2$$

avec x = (r/R - 0,97)/0,03

3) pour le déplacement vertical du centre de vrillage

- limite inférieure A"B"C"D", telle que les coordonnées des points A", B", C" et D" sont les suivantes :

$$A'' \left| \begin{array}{l} r/R=0 \\ Zv/R=-0,001 \end{array} \right. \quad B'' \left| \begin{array}{l} r/R=0,87 \\ Zv/R=-0,001 \end{array} \right. \quad C'' \left| \begin{array}{l} r/R=0,93 \\ Zv/R=-0,001 \end{array} \right. \quad D'' \left| \begin{array}{l} r/R=1 \\ Zv/R=-0,015 \end{array} \right.$$

les lignes joignant ces points pour former la limite A"B"C"D" sont des segments de droite à l'exception du segment C"D" de forme parabolique défini par :

$$Zv(r/R)/R = - 0,001 - 0,014 \, x^2$$

avec x = (r/R - 0,93)/0,07

- limite supérieure E"F"G"H", telle que les coordonnées des points E", G", G" et H" sont les suivantes :

$$E'' \left| \begin{array}{l} r/R=0 \\ Zv/R=+0,001 \end{array} \right. \quad F'' \left| \begin{array}{l} r/R=0,87 \\ Zv/R=+0,001 \end{array} \right. \quad G'' \left| \begin{array}{l} r/R=0,97 \\ Zv/R=+0,001 \end{array} \right. \quad H'' \left| \begin{array}{l} r/R=1 \\ Zv/R=-0,005 \end{array} \right.$$

les lignes joignant ces points pour former la limite E"F"G"H" sont des segments de droite, à l'exception du segment G"H" de forme parabolique défini par :

$$Zv(r/R)/R = + 0,001 - 0,006 \, x^2$$

avec x = (r/R - 0,97)/0,03

On notera que la figure 3, par rapport à la représentation de la figure 2, montre une forme en plan d'une pale 1, obtenue en étendant davantage vers son extrémité externe la zone de transition (zone2), et en étendant le "saumon" (zone 4) davantage vers l'intérieur, jusqu'à ce que les points R et S des figures 4, 5 et 6 soient sensiblement confondus.

En résumé, la présente invention utilise, pour définir la pale 1, quatre caractéristiques géométriques originales :

1) la répartition radiale de la surface de la pale, sous forme d'une loi de corde : $L/\overline{L} = f(r/R)$ ;
2) la répartition radiale de la flèche, sous forme d'une loi de déplacement du foyer dans le sens de la corde : $Y'f/R = f(r/R)$ ;
3) la répartition radiale du dièdre, sous forme d'une loi de déplacement du centre de vrillage hors du plan de construction : $Zv/R = f(r/R)$ ;
4) la répartition radiale du vrillage, sous forme d'une loi de calage : $\theta a = f(r/R)$ .

Ces quatre caractéristiques sont mises en oeuvre pour combattre les trois phénomènes limitant les performances du rotor : les ondes de choc, le décrochage et l'interaction pale-tourbillon.

## Revendications

1. Pale à extrémité en flèche pour voilure tournante d'aéronef, destinée à faire partie d'un rotor dont le moyeu (2) est lié à ladite pale (1), laquelle est susceptible d'être entraînée en rotation autour de l'axe dudit moyeu, ladite pale (1) comportant un bord d'attaque (5) et un bord de fuite (6), et étant formée de sections transversales élémentaires successives (7), identifiées par la distance r séparant chacune d'entre elles de l'axe de rotation dudit moyeu, et présentant, chacune, un profil de corde déterminée et un foyer aérodynamique dont le déport par rapport à l'axe de variation de pas, orthogonal à chacune desdites sections, détermine la flèche de ladite pale, caractérisée en ce que, ladite pale (1) étant subdivisée, le long de son étendue longitudinale, en quatre zones, à savoir une première zone s'étendant du bord interne de la pale R0 à une première section R1 située entre 75% et 87% de la longueur totale de la pale, comptée à partir de l'axe de rotation du moyeu, une deuxième zone s'étendant de la première section R1 à une deuxième section R2 située entre 87% et 93% de la longueur totale de la pale, une troisième zone s'étendant de la deuxième section R2 à une troisième section R3 située entre 93% et 97% de la longueur totale de la pale, et une quatrième zone s'étendant de la troisième section R3 au bord externe libre R de la pale, la longueur de la corde L croît de façon généralement linéaire dans ladite première zone, évolue suivant une fonction cubique dans ladite deuxième zone, est constante dans ladite troisième zone, et évolue suivant une fonction parabolique dans ladite quatrième zone de sorte que la pale (1) présente un double effilement progressif vers les bords interne et externe de cette dernière, la variation de la longueur de la corde étant telle que le bord d'attaque (5) et le bord de fuite (6) de la pale, le long de son étendue longitudinale, ne présentent aucune cassure, le bord d'attaque ne comportant que des segments convexes ou rectilignes et le bord de fuite que des segments concaves ou rectilignes, et le déport Y'f du foyer aérodynamique par rapport à l'axe de variation de pas varie de façon linéaire dans ladite première zone de sorte que le foyer aérodynamique soit déporté vers le bord d'attaque (5) dans cette zone, évolue suivant une fonction cubique dans ladite deuxième zone, varie de façon linéaire dans ladite troisième zone, et évolue suivant une fonction parabolique dans ladite quatrième zone de façon que la pale (1) présente une flèche vers l'arrière, la variation du déport du foyer aérodynamique étant telle que le bord d'attaque (5) et le bord de fuite (6) de la pale, le long de son étendue longitudinale, ne présentent aucune cassure.

2. Pale selon la revendication 1,
caractérisée en ce que la variation de la longueur L de la corde par rapport à la longueur moyenne $\overline{L}$ de celle-ci est comprise entre des limites inférieure ABCD et supérieure EFGH, telles que les coordonnées des points A, B, C et D sont les suivantes :

$$A \begin{vmatrix} r/R=0 \\ L/\overline{L}=0,60 \end{vmatrix} \quad B \begin{vmatrix} r/R=0,87 \\ L/\overline{L}=1,05 \end{vmatrix} \quad C \begin{vmatrix} r/R=0,93 \\ L/\overline{L}=1,05 \end{vmatrix} \quad D \begin{vmatrix} r/R=1 \\ L/\overline{L}=0,25 \end{vmatrix}$$

les lignes joignant ces points pour former la limite ABCD étant des segments de droite à l'exception du segment CD de forme parabolique défini par :

$$L(r/R)/\overline{L} = 1,05 - 0,80\, x^2$$

$$\text{avec } x = (r/R - 0,93)/0,07$$

et les coordonnées des points E, F, G et H sont les suivantes :

$$E \begin{vmatrix} r/R=0 \\ L/\overline{L}=0,75 \end{vmatrix} \quad F \begin{vmatrix} r/R=0,87 \\ L/\overline{L}=1,20 \end{vmatrix} \quad G \begin{vmatrix} r/R=0,97 \\ L/\overline{L}=1,20 \end{vmatrix} \quad H \begin{vmatrix} r/R=1 \\ L/\overline{L}=0,45 \end{vmatrix}$$

les lignes joignant ces points pour former la limite EFGH étant des segments de droite à l'exception du segment GH de forme parabolique défini par :

$$L(r/R)/\overline{L} = 1,20 - 0,75\, x^2$$

$$\text{avec } x = (r/R - 0,97)/0,03.$$

3. Pale selon la revendication 2,
caractérisée en ce que, par rapport à la longueur moyenne $\overline{L}$ de la corde, la longueur L de la corde varie, sur l'étendue longitudinale de la pale, de la façon suivante :

- r étant la distance d'une section transversale élémentaire de pale à l'axe de rotation du moyeu ;
- R0 étant la distance du bord interne de la pale à l'axe de rotation du moyeu ;
- R1 étant la distance de l'extrémité externe de ladite première zone à l'axe de rotation du moyeu ;
- R2 étant la distance de l'extrémité externe de ladite deuxième zone à l'axe de rotation du moyeu ;
- R3 étant la distance de l'extrémité externe de ladite troisième zone à l'axe de rotation du moyeu ; et
- R étant la distance du bord externe de la pale à l'axe de rotation du moyeu ;

a) première zone de R0 à R1 :
linéairement de L0 = 0,778400 $\overline{L}$ à L1 = 1,095054 $\overline{L}$
b) deuxième zone de R1 à R2 :
de L1 à L2 = 1,104833 $\overline{L}$ suivant la fonction :

$$L(r/R)/\overline{L} = 1,103203 + 0,001630\, x^3 - 0,008149\, (1-x)^3 + 0,004889\, x\, (1 - x)\, (2x - 1)$$

dans laquelle :

$$x = (r - R1) / (R2 - R1)$$

c) troisième zone de R2 à R3 :
L2 = L3 = 1,104833 $\overline{L}$

d) quatrième zone de R3 à R :
de L3 = 1,104833 $\overline{L}$ à L4 = 0,351543 $\overline{L}$,
suivant la fonction :

$$L(r/R)/\overline{L} = 1,104833 - 0,753290\ x^2$$

dans laquelle :

$$x = (r - R3)/R\text{-}R3).$$

**4.** Pale selon la revendication 3,
caractérisée en ce que lesdites première, deuxième, troisième et quatrième zones sont définies par :
R0 = 0,202380R, R1 = 0,850000R, R2 = 0,890000R et R3 = 0,950000R.

**5.** Pale selon l'une quelconque des revendications 1 à 4, caractérisée en ce que le déport Y'f du foyer aérodynamique de chaque section par rapport à l'axe de variation de pas est compris entre des limites inférieure A'B'C'D' et supérieure E'F'G'H', telles que les coordonnées des points A', B', C' et D' sont les suivantes :

$$A'\begin{vmatrix} r/R=0 \\ Y'f=0 \end{vmatrix} \qquad B'\begin{vmatrix} r/R=0,87 \\ Y'f=0,00435R \end{vmatrix} \qquad C'\begin{vmatrix} r/R=0,93 \\ Y'f=-0,03165R \end{vmatrix} \qquad D'\begin{vmatrix} r/R=1 \\ Y'f=-0,11916R \end{vmatrix}$$

les lignes joignant ces points pour former la limite A'B'C'D' étant des segments de droite, à l'exception du segment C'D' de forme parabolique défini par :

$$Y'f(r/R)/R = -\ 0,03165 - 0,04200\ x - 0,04551\ x^2$$

$$\text{avec } x = (r/R - 0,93)/0,07$$

et les coordonnées des points E', F', G' et H' sont les suivantes :

$$E'\begin{vmatrix} r/R=0 \\ Y'f=0 \end{vmatrix} \qquad F'\begin{vmatrix} r/R=0,87 \\ Y'f=0,02610R \end{vmatrix} \qquad G'\begin{vmatrix} r/R=0,97 \\ Y'f=-0,00390R \end{vmatrix} \qquad H'\begin{vmatrix} r/R=1 \\ Y'f=-0,05557R \end{vmatrix}$$

les lignes joignant ces points pour former la limite E'F'G'H' étant des segments de droite, à l'exception de G'H' de forme parabolique défini par :

$$Y'f(r/R)/R = -\ 0,00390 - 0,00900\ x - 0,04267\ x^2$$

$$\text{avec } x = (r/R - 0,97)/0,03.$$

**6.** Pale selon les revendications 4 et 5,
caractérisée en ce que, pour assurer sensiblement le positionnement du foyer aérodynamique global de ladite pale sur l'axe de pas, le déport Y'f du foyer aérodynamique de chaque section par rapport à l'axe de variation de pas évolue, sur l'étendue longitudinale de la pale, de la façon suivante :

  . r étant la distance d'une section transversale élémentaire de pale à l'axe de rotation du moyeu ;
  . R0 étant la distance du bord interne de la pale à l'axe de rotation du moyeu ;
  . R1 étant la distance de l'extrémité externe de ladite première zone à l'axe de rotation du moyeu ;
  . R2 étant la distance de l'extrémité externe de ladite deuxième zone à l'axe de rotation du moyeu ;
  . R3 étant la distance de l'extrémité externe de ladite troisième zone à l'axe de rotation du moyeu ; et
  . R étant la distance du bord externe de la pale à l'axe de rotation du moyeu.

  a) première zone de R0 à R1 :
  de Y0 = 0,0029242 R à Y1 = 0,012282 R
  soit Y'f = 0,14449 r
  b) deuxième zone de R1 à R2 :
  de Y1 à Y2 = 0,003244 R suivant la fonction :

$$Y'f(r/R)/R = 0,01096890 - 0,00772363\ x^3 + 0,00131353\ (1\text{-}x^3) - 0,00451858\ x\ (1\text{-}x)\ (2x\text{-}1)$$

dans laquelle :

$$x = (r - R1) / (R2 - R1)$$

c) troisième zone de R2 à R3 :
de Y2 à Y3 = - 0,024733R
d) quatrième zone de R3 à R :
de Y3 à Y4 = - 0,089984R suivant la fonction :

$$Y'f(r/R)/R = -0,024733 - 0,023296\, x - 0,041955\, x^2$$

dans laquelle :

$$x = (r - R3) / (R-R3).$$

**7.** Pale selon les revendications 2 et 4 à corde $\overline{L}$ fixée et subdivisée en quatre zones définies le long de son étendue longitudinale,
caractérisée en ce que les paramètres des lois de variation le long de ladite étendue longitudinale et pour chacune desdites zones, d'une part de la longueur L de la corde de chaque section par rapport à la corde moyenne $\overline{L}$ et, d'autre part, du déport Y'f du foyer aérodynamique de chaque section par rapport à l'axe de variation de pas, assurent sensiblement le positionnement du foyer aérodynamique global de ladite pale sur ledit axe de variation de pas.

**8.** Pale selon l'une quelconque des revendications 1 à 7, dans laquelle la partie d'extrémité externe de la pale présente une courbure vers le bas au moins approximativement d'allure parabolique,
caractérisée en ce que le déplacement vertical Zv du centre de vrillage par rapport au plan de portance nulle de la pale est compris entre des limites inférieure A"B"C"D" et supérieure E"F"G"H", telles que les coordonnées des points A", B", C" et D" sont les suivantes :

$$A''\left|\begin{array}{l}r/R=0\\Zv/R=-0,001\end{array}\right. \qquad B''\left|\begin{array}{l}r/R=0,87\\Zv/R=-0,001\end{array}\right. \qquad C''\left|\begin{array}{l}r/R=0,93\\Zv/R=-0,001\end{array}\right. \qquad D''\left|\begin{array}{l}r/R=1\\Zv/R=-0,015\end{array}\right.$$

les lignes joignant ces points pour former la limite A"B"C"D" étant des segments de droite à l'exception de C"D" de forme parabolique défini par :

$$Zv(r/R)/R = - 0,001 - 0,014\, x^2$$

$$\text{avec } x = (r/R - 0,93)/0,07$$

et les coordonnées des points E", F", G" et H" sont les suivantes :

$$E''\left|\begin{array}{l}r/R=0\\Zv/R=+0,001\end{array}\right. \qquad F''\left|\begin{array}{l}r/R=0,87\\Zv/R=+0,001\end{array}\right. \qquad G''\left|\begin{array}{l}r/R=0,97\\Zv/R=+0,001\end{array}\right. \qquad H''\left|\begin{array}{l}r/R=1\\Zv/R=-0,005\end{array}\right.$$

les lignes joignant ces points pour former la limite E"F"G"H" étant des segments de droite, à l'exception de G"H" de forme parabolique défini par :

$$Zv(r/R)/R = + 0,001 - 0,006\, x^2$$

$$\text{avec } x = (r/R - 0,97)/0,03.$$

**9.** Pale selon la revendication 8,
caractérisée en ce que le déplacement vertical Zv du centre de vrillage par rapport au plan de portance nulle de la pale est tel que le centre de vrillage reste sensiblement dans ledit plan dans lesdites première, deuxième et troisième zones, et dans la quatrième zone :

$$Zv(r/R)/R = - 0,0905\, x^2$$

$$\text{avec } x = (r - R3) / (R - R3).$$

**10.** Pale selon l'une quelconque des revendications 1 à 9,
caractérisé en ce que, dans la zone R0 à RI = 0,40 à 0,50 R de la pale et dans la zone RII = 0,75 à 0,85 R à R de la pale, le taux de variation du calage aérodynamique est constant et égal à une valeur prédéterminée, tandis que, dans la zone centrale RI à RII, le taux de variation du calage aérodynamique, constant, est au moins sensiblement égal à 1,5 fois ladite valeur prédéterminée.

11. Pale selon la revendication 10, caractérisée en ce que ladite valeur prédéterminée est au moins sensiblement égale à -12° divisé par le rayon R, tandis que, dans la zone centrale RI à RII, le taux de variation du calage aérodynamique est au moins sensiblement égal à -18° divisé par le rayon R.

12. Pale selon la revendication 10 ou la revendication 11, caractérisée en ce que RI = 0,46R et RII = 0,80R.

**Claims**

1. Blade with a swept-back tip for aircraft rotary wings, intended to form part of a rotor whose hub (2) is linked to the said blade (1), which is capable of being driven in rotation around the axis of the said hub, the said blade (1) including a leading edge (5) and a trailing edge (6) and being formed by successive elementary transverse sections (7), identified by the distance $\underline{r}$ separating each of them from the axis of rotation of the said hub, and each exhibiting a defined chord profile and an aerodynamic centre whose offset with respect to the pitch variation axis, orthogonal to each of the said sections, determines the sweepback of the said blade, characterized in that, the said blade (1) being subdivided, along its longitudinal extent, into four areas, namely a first area extending from the inner edge of the blade R0 to a first section R1 situated between 75% and 87% of the total length of the blade, measured from the axis of rotation of the hub, a second area extending from the first section R1 to a second section R2 situated between 87% and 93% of the total length of the blade, a third area extending from the second section R2 to a third section R3 situated between 93% and 97% of the total length of the blade, and a fourth area extending from the third section R3 to the free outer edge R of the blade, the length of the chord L increases generally linearly in the said first area, changes according to a cubic function in the said second area, is constant in the said third area, and changes according to a parabolic function in the said fourth area so that the blade (1) exhibits a double progressive taper towards the inner and outer edges of the blade, the variation in the length of the chord being such that the leading edge (5) and the trailing edge (6) of the blade, along its longitudinal extent, exhibit no break, the leading edge including only convex or straight-line segments and the trailing edge only concave or straight-line segments, and the offset Y'f of the aerodynamic centre with respect to the pitch variation axis varies linearly in the said first area so that the aerodynamic centre is offset towards the leading edge (5) in this area, changes according to a cubic function in the said second area, varies linearly in the said third area, and changes according to a parabolic function in the said fourth area so that the blade (1) exhibits a rearward sweepback, the variation in the offset of the aerodynamic centre being such that the leading edge (5) and the trailing edge (6) of the blade, along its longitudinal extent, exhibit no break.

2. Blade according to Claim 1, characterized in that the variation in the length L of the chord with respect to the mean length $\overline{L}$ of the latter lies between lower ABCD and upper EFGH limits, such that the coordinates of the points A, B, C and D are as follows:

$$A \begin{vmatrix} r/R=0 \\ L/\overline{L}=0.60 \end{vmatrix} \qquad B \begin{vmatrix} r/R=0.87 \\ L/\overline{L}=1.05 \end{vmatrix} \qquad C \begin{vmatrix} r/R=0.93 \\ L/\overline{L}=1.05 \end{vmatrix} \qquad D \begin{vmatrix} r/R=1 \\ L/\overline{L}=0.25 \end{vmatrix}$$

the lines joining these points to form the limit ABCD being straight-line segments with the exception of the segment CD of parabolic shape defined by:

$$L(r/R)/\overline{L} = 1.05 - 0.80\, x^2$$

$$\text{with } x = (r/R - 0.93)/0.07$$

and the coordinates of the points E, F, G and H are as follows:

$$E \begin{vmatrix} r/R=0 \\ L/\overline{L}=0.75 \end{vmatrix} \qquad F \begin{vmatrix} r/R=0.87 \\ L/\overline{L}=1.20 \end{vmatrix} \qquad G \begin{vmatrix} r/R=0.97 \\ L/\overline{L}=1.20 \end{vmatrix} \qquad H \begin{vmatrix} r/R=1 \\ L/\overline{L}=0.45 \end{vmatrix}$$

the lines joining these points to form the limit EFGH being straight-line segments with the exception of the segment GH of parabolic shape defined by:

$$L(r/R)/\overline{L} = 1.20 - 0.75\, x^2$$

with x = (r/R - 0.97)/0.03.

3. Blade according to Claim 2, characterized in that, with respect to the mean length $\overline{L}$ of the chord, the length L of the chord varies, over the longitudinal extent of the blade, in the following way:

. r being the distance from an elementary transverse section of blade to the axis of rotation of the hub;
. R0 being the distance from the inner edge of the blade to the axis of rotation of the hub;
. R1 being the distance from the outer end of the said first area to the axis of rotation of the hub;
. R2 being the distance from the outer end of the said second area to the axis of rotation of the hub;
. R3 being the distance from the outer end of the said third area to the axis of rotation of the hub; and
. R being the distance from the outer edge of the blade to the axis of rotation of the hub;

a) first area from R0 to R1 :
linearly from L0 = 0.778400 $\overline{L}$ to L1 = 1.095054 $\overline{L}$
b) second area from R1 to R2 :
from L1 to L2 = 1.104833 $\overline{L}$ according to the function :

$$L(r/R)/\overline{L} = 1.103203 + 0.001630\,x^3 - 0.008149\,(1\text{-}x)^3 + 0.004889\,x\,(1 - x)\,(2x - 1)$$

in which :

$$x = (r - R1) / (R2 - R1)$$

c) third area from R2 to R3 :
L2 = L3 = 1.104833 $\overline{L}$
d) fourth area from R3 to R :
from L3 = 1.104833 $\overline{L}$ to L4 = 0.351543 $\overline{L}$, according to the function :

$$L(r/R)/\overline{L} = 1.104833 - 0.753290\,x^2$$

in which :
$$x = (r - R3)/(R\text{-}R3).$$

4. Blade according to Claim 3, characterized in that the said first, second, third and fourth areas are defined by:
R0 = 0.202380R, R1 = 0.850000R, R2 = 0.890000R and R3 = 0.950000R.

5. Blade according to any one of Claims 1 to 4, characterized in that the offset Y'f of the aerodynamic centre of each section with respect to the pitch variation axis lies between lower A'B'C'D' and upper E'F'G'H' limits, such that the coordinates of the points A', B', C' and D' are as follows :

$$A' \begin{vmatrix} r/R=0 \\ Y'f=0 \end{vmatrix} \qquad B' \begin{vmatrix} r/R=0.87 \\ Y'f=0.00435R \end{vmatrix} \qquad C' \begin{vmatrix} r/R=0.93 \\ Y'f=-0.03165R \end{vmatrix} \qquad D' \begin{vmatrix} r/R=1 \\ Y'f=-0.11916R \end{vmatrix}$$

the lines joining these points to form the limit A'B'C'D' being straight-line segments, with the exception of the segment C'D' of parabolic shape defined by :

$$Y'f(r/R)/R = - 0.03165 - 0.04200\,x - 0.04551\,x^2$$

with x = (r/R - 0.93)/0.07

and the coordinates of the points E', F', G' and H' are as follows:

$$E' \begin{vmatrix} r/R=0 \\ Y'f=0 \end{vmatrix} \qquad F' \begin{vmatrix} r/R=0.87 \\ Y'f=0.02610R \end{vmatrix} \qquad G' \begin{vmatrix} r/R=0.97 \\ Y'f=-0.00390R \end{vmatrix} \qquad H' \begin{vmatrix} r/R=1 \\ Y'f=-0.05557R \end{vmatrix}$$

the lines joining these points to form the limit E'F'G'H' being straight-line segments, with the exception of G'H' of parabolic shape defined by :

$$Y'f(r/R)/R = - 0.00390 - 0.00900\,x - 0.04267\,x^2$$

with x = (r/R - 0.97)/0.03.

6. Blade according to Claims 4 and 5, characterized in that, in order substantially to ensure the positioning of the overall aerodynamic centre of the said blade on the pitch axis, the offset Y'f of the aerodynamic centre of each section with respect to the pitch variation axis changes, over the longitudinal extent of the blade, in the following way:

. r being the distance from an elementary transverse section of blade to the axis of rotation of the hub;
. R0 being the distance from the inner edge of the blade to the axis of rotation of the hub;
. R1 being the distance from the outer end of the said first area to the axis of rotation of the hub;
. R2 being the distance from the outer end of the said second area to the axis of rotation of the hub;
. R3 being the distance from the outer end of the said third area to the axis of rotation of the hub; and
. R being the distance from the outer edge of the blade to the axis of rotation of the hub.

a) first area from R0 to R1 :
from Y0 = 0.0029242 R to Y1 = 0.012282 R
i.e. Y'f = 0.014449 r
b) second area from R1 to R2 :
from Y1 to Y2 = 0.003244 R according to the function:

$$Y'f(r/R)/R = 0.01096890 - 0.00772363\, x^3 + 0.00131353\, (1-x^3) - 0.00451858\, x\, (1-x)(2x-1)$$

in which :

$$x = (r - R1) / (R2 - R1)$$

c) third area from R2 to R3 :
from Y2 to Y3 = - 0.024733R
d) fourth area from R3 to R :
from Y3 to Y4 = - 0.089984R according to the function :

$$Y'f(r/R)/R = - 0.024733 - 0.023296\, x - 0.041955\, x^2$$

in which :

$$x = (r - R3) / (R-R3).$$

7. Blade according to Claims 2 and 4 with fixed chord $\overline{\text{L}}$ subdivided into four areas defined along its longitudinal extent, characterized in that the parameters of the laws of variation along the said longitudinal extent and for each of the said areas, on the one hand of length L of the chord of each section with respect to the mean chord $\overline{\text{L}}$ and, on the other hand, of the offset Y'f of the aerodynamic centre of each section with respect to the pitch variation axis, substantially ensure the positioning of the overall aerodynamic centre of the said blade on the said pitch variation axis.

8. Blade according to any one of Claims 1 to 7, in which the outer tip part of the blade exhibits downwards curvature at least approximately of parabolic shape, characterized in that the vertical displacement Zv of the centre of twist with respect to the zero-lift plane of the blade lies between lower A''B''C''D'' and upper E''F''G''H'' limits, such that the coordinates of the points A'', B'', C'' and D'' are as follows:

$$A''\begin{vmatrix} r/R=0 \\ Zv/R=-0.001 \end{vmatrix} \qquad B''\begin{vmatrix} r/R=0.87 \\ Zv/R=-0.001 \end{vmatrix} \qquad C''\begin{vmatrix} r/R=0.93 \\ Zv/R=-0.001 \end{vmatrix} \qquad D''\begin{vmatrix} r/R=1 \\ Zv/R=-0.015 \end{vmatrix}$$

the lines joining these points to form the limit A''B''C''D'' being straight-line segments with the exception of C''D'' of parabolic shape defined by :

$$Zv(r/R)/R = - 0.001 - 0.014\, x^2$$

with x = (r/R - 0.93)/0.07

and the coordinates of the points E'', F'', G'' and H'' are as follows :

$$E'' \left| \begin{array}{l} r/R=0 \\ Zv/R=+0.001 \end{array} \right. \qquad F'' \left| \begin{array}{l} r/R=0.87 \\ Zv/R=+0.001 \end{array} \right. \qquad G'' \left| \begin{array}{l} r/R=0.97 \\ Zv/R=+0.001 \end{array} \right. \qquad H'' \left| \begin{array}{l} r/R=1 \\ Zv/R=-0.005 \end{array} \right.$$

the lines joining these points to form the limit E"F"G"H" being straight-line segments, with the exception of G"H" of parabolic shape defined by :

$$Zv(r/R)/R = + 0.001 - 0.006 \, x^2$$

with x = (r/R - 0.97)/0.03.

9. Blade according to Claim 8, characterized in that the vertical displacement Zv of the centre of twist with respect to the zero-lift plane of the blade is such that the centre of twist remains substantially in the said plane in the said first, second and third areas, and in the fourth area :

$$Zv(r/R)/R = - 0.0905 \, x^2$$

with x = (r - R3) / (R - R3).

10. Blade according to any one of Claims 1 to 9, characterized in that in the area R0 to RI = 0.40 to 0.50 R of the blade and in the area RII = 0.75 to 0.85 R to R of the blade, the rate of variation of the aerodynamic setting, is constant and equal to a predetermined value, whereas, in the central area RI to RII, the rate of variation of the aerodynamic setting, which is constant, is at least substantially equal to 1.5 times the said predetermined value.

11. Blade according to Claim 10, characterized in that the said predetermined value is at least substantially equal to - 12° divided by the radius R, whereas, in the central area RI to RII, the rate of variation of the aerodynamic setting is at least substantially equal to -18° divided by the radius R.

12. Blade according to Claim 10 or Claim 11, characterized in that RI = 0.46R and RII = 0.80R.

## Patentansprüche

1. Rotorblatt mit Pfeilspitze für ein Drehflügelflugzeug, das dazu bestimmt ist, einen Teil eines Rotors zu bilden, dessen Nabe (2) mit dem Rotorblatt (1) verbunden ist, welche geeignet ist, um die Achse der Nabe drehangetrieben zu werden, wobei das Rotorblatt (1) eine Vorderkante (5) und eine Hinterkante (6) besitzt und aus aufeinanderfolgenden Elementquerschnitten (7) besteht, die durch den Abstand r̲ bestimmt sind, der jeden von ihnen von der Rotationsachse der Nabe trennt, und die jeder ein bestimmtes Sehnenprofil und einen aerodynamischen Mittelpunkt aufweisen, dessen zu jedem der Querschnitte orthogonale Versetzung in bezug auf die Achse der Steigungsänderung die Pfeilstellung des Rotorblatts bestimmt,
dadurch gekennzeichnet, daß, das Rotorblatt (1) entlang seiner Längsausdehnung in vier Zonen unterteilt ist, nämlich eine erste Zone, die sich vom inneren Rand des Rotorblatts R0 bis zu einem ersten Querschnitt R1 erstreckt, der von der Rotationsachse der Nabe aus gerechnet bei 75% bis 87% der Gesamtlänge des Rotorblatts liegt, eine zweite Zone, die sich vom ersten Querschnitt R1 bis zu einem zweiten Querschnitt R2 erstreckt, der bei 87% bis 93% der Gesamtlänge des Rotorblatts liegt, eine dritte Zone, die sich vom zweiten Querschnitt R2 bis zu einem dritten Querschnitt R3 erstreckt, der bei 93% bis 97% der Gesamtlänge des Rotorblatts liegt, und eine vierte Zone, die sich vom dritten Querschnitt R3 bis zum freien äußeren Rand R des Rotorblatts erstreckt, die Länge der Sehne L in der ersten Zone im allgemeinen linear zunimmt, sich in der zweiten Zone gemäß einer kubischen Funktion ändert, in der dritten Zone konstant ist und sich in der vierten Zone gemäß einer parabotischen Funktion ändert, so daß das Rotorblatt (1) ein zum inneren und äußeren Rand des letzteren ein doppelt progressives Zuspitzungsverhältnis aufweist, wobei die Änderung der Länge der Sehne so ist, daß die Vorderkante (5) und die Hinterkante (6) des Rotorblatts entlang seiner Längsausdehnung keinen Bruch aufweist, wobei die Vorderkante nur konvexe oder gerade Abschnitte und die Hinterkante nur konkave oder gerade Abschnitte besitzt, und die Versetzung Y'f des aerodynamischen Mittelpunkts sich in bezug auf die Achse der Steigungsänderung in der ersten Zone in linearer Weise ändert, so daß in dieser Zone der aerodynamische Mittelpunkt zur Vorderkante hin (5) verschoben ist, sich in der zweiten Zone gemäß einer kubischen Funktion ändert, sich in der dritten Zone in linearer Weise ändert und sich in der vierte Zone gemäß einer parabotischen Funktion so ändert, daß das Rotorblatt (1) eine Pfeilstellung nach hinten aufweist, wobei die Änderung der Versetzung des aerodynamischen Mittetpunkts so ist, daß die Vorderkante (5) und die Hinterkante (6) des Rotorblatts entlang seiner Längsausdehnung keinen Bruch aufweist.

**2.** Rotorblatt nach Anspruch 1, dadurch gekennzeichnet, daß die Änderung der Länge L der Sehne in bezug auf ihre mittlere Länge $\overline{L}$ zwischen einem unteren ABCD und oberen EFGH Grenzwert liegt, derart, daß die Koordinaten der Punkte A, B, C und D die folgenden sind:

$$A\begin{vmatrix} r/R=0 \\ L/\overline{L}=0{,}60 \end{vmatrix} \qquad B\begin{vmatrix} r/R=0{,}87 \\ L/\overline{L}=1{,}05 \end{vmatrix} \qquad C\begin{vmatrix} r/R=0{,}93 \\ L/\overline{L}=1{,}05 \end{vmatrix} \qquad D\begin{vmatrix} r/R=1 \\ L/\overline{L}=0{,}25 \end{vmatrix}$$

wobei die diese Punkte zum Bilden der Grenze ABCD verbindenden Linien Geradenabschnitte sind, außer dem Abschnitt CD von parabolischer Form, der definiert ist durch:

$$L(r/R)/\overline{L} = 1{,}05 - 0{,}80\, x^2$$

$$\text{mit } x = (r/R - 0{,}93)/0{,}07,$$

und die Koordinaten der Punkte E, F, G und H die folgenden sind:

$$E\begin{vmatrix} r/R=0 \\ L/\overline{L}=0{,}75 \end{vmatrix} \qquad F\begin{vmatrix} r/R=0{,}87 \\ L/\overline{L}=1{,}20 \end{vmatrix} \qquad G\begin{vmatrix} r/R=0{,}97 \\ L/\overline{L}=1{,}20 \end{vmatrix} \qquad H\begin{vmatrix} r/R=1 \\ L/\overline{L}=0{,}45 \end{vmatrix}$$

wobei die diese Punkte zum Bilden der Grenze EFGH verbindenden Linien Geradenabschnitte sind, außer dem Abschnitt GH von parabotischer Form, der definiert ist durch:

$$L(r/R)/\overline{L} = 1{,}20 - 0{,}75\, x^2$$

$$\text{mit } x = (r/R - 0{,}97)/0{,}03.$$

**3.** Rotorblatt nach Anspruch 2, dadurch gekennzeichnet, daß sich in bezug auf die mittlere Länge $\overline{L}$ der Sehne die Länge L der Sehne über die Längsausdehnung des Rotorblatts in folgender Weise ändert:

a) erste Zone von R0 bis R1:
linear von L0 = 0,778400 $\overline{L}$ bis L1 = 1,095054 $\overline{L}$,
b) zweite Zone von R1 bis R2:
von L1 bis L2 = 1,104833 $\overline{L}$ gemäß der Funktion

$$L(r/R)/\overline{L} = 1{,}103203 + 0{,}001630\, x^3 - 0{,}008149\,(1-x)^3 + 0{,}004889\, x\,(1-x)\,(2x-1)$$

in der:

$$x = (r - R1) / (R2 - R1)$$

c) dritte Zone von R2 bis R3:
L2 = L3 = 1,104833 $\overline{L}$
d) vierte Zone von R3 bis R:
von L3 = 1,104833 $\overline{L}$ bis L4 = 0,351543 $\overline{L}$ gemäß der Funktion:

$$L(r/R)/\overline{L} = 1{,}104833 - 0{,}753290\, x^2,$$

in der:

$$x = (r - R3)/(R-R3),$$

wobei

- r der Abstand eines Elementquerschnitts des Rotorblatts von der Rotationsachse der Nabe ist;
- R0 der Abstand des inneren Randes des Rotorblatts von der Rotationsachse der Nabe ist;
- R1 der Abstand des äußeren Endes der ersten Zone von der Rotationsachse der Nabe ist;
- R2 der Abstand des äußeren Endes der zweiten Zone von der Rotationsachse der Nabe ist;
- R3 der Abstand des äußeren Endes der dritten Zone von der Rotationsachse der Nabe ist; und
- R der Abstand des äußeren Randes des Rotorblatts von der Rotationsachse der Nabe ist.

**4.** Rotorblatt nach Anspruch 3, dadurch gekennzeichnet, daß die erste, zweite, dritte und vierte Zone durch R0 = 0,202380R, R1 = 0,850000R, R2 = 0,890000R und R3 = 0,950000R definiert sind.

**5.** Rotorblatt nach einem der Ansprüche 1 bis 4, dadurch gekennzeichnet, daß die Versetzung Y'f des aerodynamischen Mittelpunkts jedes Querschnittes in bezug auf die Achse der Steigungsänderung zwischen einem unteren A'B'C'D' und oberen Grenzwert E'F'G'H' liegt, derart, daß die Koordinaten A', B', C' und D' die folgenden sind:

$$A' \begin{vmatrix} r/R=0 \\ Y'f=0 \end{vmatrix} \qquad B' \begin{vmatrix} r/R=0,87 \\ Y'f=0,00435R \end{vmatrix} \qquad C' \begin{vmatrix} r/R=0,93 \\ Y'f=-0,03165R \end{vmatrix} \qquad D' \begin{vmatrix} r/R=1 \\ Y'f=-0,11916R \end{vmatrix}$$

wobei die diese Punkte zum Bilden der Grenze A'B'C'D' verbindenden Linien Geradenabschnitte sind, außer dem Abschnitt C'D' von parabolischer Form, der definiert ist durch:

$$Y'f(r/R)/R = -0,03165 - 0,04200\,x - 0,04551\,x^2$$

$$\text{mit } x = (r/R - 0,93)/0,07,$$

und die Koordinaten der Punkte E', F', G' und H' die folgenden sind:

$$E' \begin{vmatrix} r/R=0 \\ Y'f=0 \end{vmatrix} \qquad F' \begin{vmatrix} r/R=0,87 \\ Y'f=0,02610R \end{vmatrix} \qquad G' \begin{vmatrix} r/R=0,97 \\ Y'f=-0,00390R \end{vmatrix} \qquad H' \begin{vmatrix} r/R=1 \\ Y'f=-0,05557R \end{vmatrix}$$

wobei die diese Punkte zum Bilden der Grenze E'F'G'H' verbindenden Linien Geradenabschnitte sind, mit Ausnahme von G'H' von parabolischer Form, die definiert ist durch:

$$Y'f(r/R)/R = -0,00390 - 0,00900\,x - 0,04267\,x^2$$

$$\text{mit } x = (r/R - 0,97)/0,03.$$

**6.** Rotorblatt nach den Ansprüchen 4 und 5, dadurch gekennzeichnet, daß, um die Positionierung des aerodynamischen Gesamtmittelpunktes des Rotorblatts auf der Achse der Steigung im wesentlichen sicherzustellen, sich die Versetzung Y'f des aerodynamischen Mittelpunktes jedes Querschnittes in bezug auf die Achse der Steigungsänderung auf der Längsausdehnung des Rotorblatts in der folgenden Weise ändert:

a) erste Zone von R0 bis R1:
von Y0 = 0,0029242 R bis Y1 = 0,012282 R,
mit Y'f = 0,014449 r,
b) zweite Zone von R1 bis R2:
von Y1 bis Y2 = 0,003244 R gemäß der Funktion:

$$Y'f(r/R)/R = 0,01096890 - 0,00772363\,x^3 + 0,00131353\,(1-x^3) - 0,00451858\,x\,(1-x)\,(2x-1)$$

in der:

$$x = (r - R1) / (R2 - R1)$$

c) dritte Zone von R2 bis R3:
von Y2 bis Y3 = -0,024733R
d) vierte Zone von R3 bis R:
von Y3 bis Y4 = -0,089984R gemäß der Funktion:

$$Y'f(r/R)/R = -0,024733 - 0,023296\,x - 0,041955\,x^2,$$

in der:

$$x = (r - R3) / (R-R3),$$

wobei

- r der Abstand eines Elementquerschnitts des Rotorblatts von der Rotationsachse der Nabe ist;
- R0 der Abstand des inneren Randes des Rotorblatts von der Rotationsachse der Nabe ist;

- R1 der Abstand des äußeren Endes der ersten Zone von der Rotationsachse der Nabe ist;
- R2 der Abstand des äußeren Endes der zweiten Zone von der Rotationsachse der Nabe ist;
- R3 der Abstand des äußeren Endes der dritten Zone von der Rotationsachse der Nabe ist; und
- R der Abstand des äußeren Randes des Rotorblatts von der Rotationsachse der Nabe ist.

7. Rotorblatt nach den Ansprüchen 2 und 4 mit fester Sehne $\overline{L}$ und unterteilt in vier Zonen, die entlang seiner Längsausdehnung definiert sind, dadurch gekennzeichnet, daß die Parameter der Änderungsgesetze entlang der Längsausdehnung und für jede der Zonen, einerseits der Länge L der Sehne jedes Querschnittes in bezug auf die mittlere Sehne $\overline{L}$ und andererseits der Versetzung Y'f des aerodynamischen Mittelpunkts jedes Querschnittes in bezug auf die Achse der Steigungsänderung, im wesentlichen die Positionierung des aerodynamischen Gesamtmittelpunkts des Rotorblatts auf der Achse der Steigungsänderung sicherstellen.

8. Rotorblatt nach einem der Ansprüche 1 bis 7, bei dem der Teil des äußeren Endes des Rotorblatts eine Krümmung nach unten mit wenigstens annähernd parabolischem Verlauf aufweist, dadurch gekennzeichnet, daß die vertikale Verlagerung Zv des Zentrums der Verwindung in bezug auf die Ebene des Nullauftriebs zwischen einem unteren A"B"C"D" und oberen Grenzwert E"F"G"H" liegt, derart, daß die Koordinaten der Punkte A", B", C" und D" die folgenden sind:

$$A" \begin{vmatrix} r/R=0 \\ Zv/R=-0,001 \end{vmatrix} \qquad B" \begin{vmatrix} r/R=0,87 \\ Zv/R=-0,001 \end{vmatrix}$$

$$C" \begin{vmatrix} r/R=0,93 \\ Zv/R=-0,001 \end{vmatrix} \qquad D" \begin{vmatrix} r/R=1 \\ Zv/R=-0,015 \end{vmatrix}$$

wobei die diese Punkte zum Bilden der Grenze A"B"C"D" verbindenden Linien Geradenabschnitte sind, mit Ausnahme von C"D" von parabolischer Form, der definiert ist durch:

$$Zv(r/R)/R = - 0,001 - 0,014 \, x^2$$

$$\text{mit } x = (r/R - 0,93)/0,07,$$

und die Koordinaten der Punkte E", F", G" und H" die folgenden sind:

$$E" \begin{vmatrix} r/R=0 \\ Zv/R=+0,001 \end{vmatrix} \qquad F" \begin{vmatrix} r/R=0,87 \\ Zv/R=+0,001 \end{vmatrix}$$

$$G" \begin{vmatrix} r/R=0,97 \\ Zv/R=+0,001 \end{vmatrix} \qquad H" \begin{vmatrix} r/R=1 \\ Zv/R=-0,005 \end{vmatrix}$$

wobei die diese Punkte zum Bilden der Grenze E"F"G"H" verbindenden Linien Geradenabschnitte sind, mit Ausnahme von G"H" von parabolischer Form, der definiert ist durch:

$$Zv(r/R)/R = + 0,001 - 0,006 \, x^2$$

$$\text{mit } x = (r/R - 0,97)/0,03.$$

9. Rotorblatt nach Anspruch 8, dadurch gekennzeichnet, daß die vertikale Verlagerung Zv des Zentrums der Verwindung in bezug auf die Ebene des Nullauftriebs des Rotorblatts derart ist, daß das Zentrum der Verwindung in der ersten zweiten und dritten Zone im wesentlichen in der Ebene bleibt und in der vierten Zone bei:

$$Zv(r/R)/R = - 0,0905 \, x^2$$

$$\text{mit } x = (r - R3) / (R - R3).$$

10. Rotorblatt nach einem der Ansprüche 1 bis 9, dadurch gekennzeichnet, daß in der Zone R0 bis RI = 0,40 bis 0,50 R des Rotorblatts und in der Zone RII = 0,75 bis 0,85 R des Rotorblatts der Betrag der Änderung des aerodynamischen Neigungswinkels konstant und gleich einem festgelegten Wert ist, während in der mittleren Zone RI bis RII der Betrag der Änderung des aerodynamischen Neigungswinkels, der konstant ist, wenigstens im wesentlichen gleich dem 1,5fachen des festgelegten Wertes ist.

11. Rotorblatt nach Anspruch 10, dadurch gekennzeichnet, daß der festgelegte Wert wenigstens im wesentlichen gleich - 12° geteilt durch den Radius R ist, während in der mittleren Zone RI bis RII der Betrag der Änderung des aerodynamischen Neigungswinkels wenigstens im wesentlichen gleich -18° geteilt durch den Radius R ist.

12. Rotorblatt nach Anspruch 10 oder Anspruch 11, dadurch gekennzeichnet, daß RI = 0,46R und RII = 0,80R ist.

FIG.1

EP 0 565 413 B1

FIG.2

FIG.3

EP 0 565 413 B1

FIG.4

EP 0 565 413 B1

FIG.5

EP 0 565 413 B1

28

FIG.6

FIG.7

# FIG.8a

# FIG.8b

# FIG.8c